# EUROPEAN PATENT APPLICATION

(11) **EP 4 462 669 A1**
(43) Date of publication of application: **13.11.2024**
(21) Application number: 24732840.4
(22) Date of filing: 19.03.2024
(51) Int. Cl.: H02M 7/48

(54) **POWER SUPPLY DEVICE**

(30) Priority: 31.03.2023 JP 2023057981
(71) Applicant: DAIKIN INDUSTRIES, LTD., Osaka-shi, Osaka 530-0001 (JP)
(72) Inventor: TANIGUCHI, Tomoisa, Osaka-shi, Osaka 530-0001 (JP); DOI, Hirotaka, Osaka-shi, Osaka 530-0001 (JP); KONO, Masaki, Osaka-shi, Osaka 530-0001 (JP)
(74) Representative: Hoffmann Eitle
(86) International application number: PCT/JP2024/010815
(87) International publication number: WO 2024/203643

(57) **Abstract**

An object is to provide a power supply device that provides sufficient protection against an excessive voltage generated by a resonance voltage generated when a power source is started. An excessive voltage protection circuit (5) coupled between a first direct-current bus (11) and a second direct-current bus (12) includes a semiconductor switch (52). The excessive voltage protection circuit (5) performs operation of protecting an inverter circuit (6) serving as a circuit device against an excessive voltage when the semiconductor switch (52) is turned on. A drive circuit (9) is a circuit that drives the semiconductor switch (52). The drive circuit (9) is supplied with driving power as power is supplied to power source terminals (PT), and enters a drivable state in which the semiconductor switch (52) is able to be turned on in a first period of time from when a direct-current voltage starts to rise along with start of power supply to the power source terminals (PT) to a half cycle of resonance generated in a closed circuit (CL) including a power source (200), a capacitor (4), and an inductor (3).

## Description

### TECHNICAL FIELD

The present disclosure related to a power supply device for supplying power to a load.

### BACKGROUND ART

PTL 1 (Japanese Unexamined Patent Application Publication No. 2020-124104) discloses a power supply device that is a type of a power supply device that supplies power to a load. In the power supply device described in PTL 1, a film capacitor that is smaller in capacitance than an electrolytic capacitor may be used without using an electrolytic capacitor serving as a smoothing capacitor. In an excessive voltage protection circuit provided in the power supply device, a period of time from when a power source is turned on to attainment of a state in which a drive circuit that drives the excessive voltage protection circuit is allowed to turn on or off a semiconductor switch in the excessive voltage protection circuit may be longer than a half cycle of a LC resonance (an inductance and capacitance resonance) voltage generated between two terminals of the capacitor.

### SUMMARY OF INVENTION

### <Technical Problem>

When the time elapsed from the power source being turned on until the drive circuit is able to activate or deactivate the overvoltage protection circuit exceeds half of an LC resonance cycle, there is a possibility that the overvoltage protection circuit may fail to operate when an overvoltage condition occurs after the power supply device has started up. In a configuration in which a power source that supplies driving power for a drive circuit also serves as a power source that supplies power to a power supply device, in particular, a delay in operation to respond to an excessive voltage state may occur in an excessive voltage protection circuit.

For a power supply device, there is an issue for providing sufficient protection against an excessive voltage generated by a resonance voltage generated when a power source is started.

### <Solution to Problem>

A power supply device according to a first aspect is a power supply device provided with a first direct-current bus to which a direct-current voltage is applied, a second direct-current bus having a potential lower than a potential in the first direct-current bus, and a capacitor coupled between the first direct-current bus and the second direct-current bus, and the power supply device converts direct-current power supplied to the first direct-current bus and the second direct-current bus to supply the converted power to a load. The power supply device includes power source terminals, an inductor, a circuit device, an excessive voltage protection circuit, and a drive circuit. The power source terminals are supplied with power from a power source. The inductor is inserted in a wiring path from the power source terminal to the first direct-current bus or the second direct-current bus. The circuit device is coupled between the first direct-current bus and the second direct-current bus. The excessive voltage protection circuit is coupled between the first direct-current bus and the second direct-current bus, includes a semiconductor switch, and performs operation of protecting the circuit device against an excessive voltage when the semiconductor switch is turned on. The drive circuit is a circuit that drives the semiconductor switch. The drive circuit is supplied with driving power as power is supplied to the power source terminals, and enters a drivable state in which the semiconductor switch is able to be turned on in a first period of time from when the direct-current voltage starts to rise along with start of power supply to the power source terminals to a half cycle of resonance generated in a closed circuit including the power source, the capacitor, and the inductor.

In the power supply device according to the first aspect, the excessive voltage protection circuit is driven by the drive circuit that enters the drivable state in which the semiconductor switch is able to be turned on in the first period of time from when the direct-current voltage starts to rise to a half cycle of resonance generated in the closed circuit. As a result, it is possible to suppress application of an excessive voltage to the circuit device by turning on the semiconductor switch in the excessive voltage protection circuit before the circuit device reaches an excessive voltage due to resonance generated when the direct-current voltage rises, making it possible to improve the power supply device in protection reliability against an excessive voltage.

In a power supply device according to a second aspect, which corresponds to the power supply device according to the first aspect, the drive circuit compares an inter-line voltage between the first direct-current bus and the second direct-current bus with a threshold voltage that is higher than the inter-line voltage when stability is attained, and turns on the semiconductor switch when the inter-line voltage exceeds the threshold voltage.

In a power supply device according to a third aspect, which corresponds to the power supply device according to the first aspect or the second aspect, the circuit device is an inverter circuit that is coupled between the first direct-current bus and the second direct-current bus and that includes a semiconductor element.

A power supply device according to a fourth aspect, which corresponds to the power supply device according to any of the first aspect to the third aspect, further includes a first power supply circuit that supplies power to the drive circuit in a predetermined period of time including the first period of time as power is supplied to the power source terminals, in which, in the first power supply circuit, a first output voltage of the first power supply circuit reaches a voltage satisfying the drivable state within the first period of time.

A power supply device according to a fifth aspect, which corresponds to the power supply device according to the fourth aspect, further includes a second power supply circuit that supplies power to the drive circuit in a second period of time after the predetermined period of time has elapsed, in which, in the second power supply circuit, a second output voltage of the second power supply circuit reaches a voltage satisfying the drivable state after the first period of time has elapsed and until a predetermined period of time has elapsed.

In the power supply device according to the fifth aspect, using a power supply circuit that is higher in efficiency than the first power supply circuit as the second power supply circuit makes it possible to reduce losses in the power supply circuits.

In a power supply device according to a sixth aspect, which corresponds to the power supply device according to the fifth aspect, the first power supply circuit stops after the second output voltage of the second power supply circuit has reached a voltage satisfying the drivable state.

In the power supply device according to the sixth aspect, stopping the first power supply circuit after the second output voltage of the second power supply circuit has reached a voltage satisfying the drivable state makes it possible to reduce power consumption in the first power supply circuit.

In a power supply device according to a seventh aspect, which corresponds to the power supply device according to the fifth aspect or the sixth aspect, the first power supply circuit has a smaller power capacity than a power capacity of the second power supply circuit.

In the power supply device according to the seventh aspect, reducing the power capacity of the first power supply circuit makes it possible to reduce the first power supply circuit in cost and size. As a result, it is possible to suppress increases in cost and size of the power source system in which the first power supply circuit and the second power supply circuit are combined with each other.

A power supply device according to an eighth aspect, which corresponds to the power supply device according to any of the fifth aspect to the seventh aspect, further includes a diode having an anode to which the second output voltage of the second power supply circuit is applied and a cathode to which the first output voltage of the first power supply circuit is applied, in which the drive circuit accepts power supplied from the cathode of the diode.

In a power supply device according to a ninth aspect, which corresponds to the power supply device according to any of the fourth aspect to the eighth aspect, the first power supply circuit includes a Zener diode and a current limiting element or a current limiting circuit, and the current limiting element or the current limiting circuit limits a current flowing through the Zener diode.

In a power supply device according to a tenth aspect, which corresponds to the power supply device according to the ninth aspect, the current limiting circuit is a constant current circuit.

In a power supply device according to an eleventh aspect, which corresponds to the power supply device according to any of the first aspect to the tenth aspect, the power source is an alternating-current power source, and a rectifier that rectifies an alternating-current voltage of the alternating-current power source into the direct-current voltage is inserted in the wiring path from the power source terminal to the first direct-current bus and the second direct-current bus.

### BRIEF DESCRIPTION OF DRAWINGS

Fig. 1 is a schematic diagram illustrating an example of a configuration of a power supply device according to a first embodiment.
Fig. 2 is a schematic diagram illustrating another example of the configuration of the power supply device according to the first embodiment.
Fig. 3 is a schematic diagram illustrating still another example of the configuration of the power supply device according to the first embodiment.
Fig. 4 is a schematic diagram illustrating still another example of the configuration of the power supply device according to the first embodiment.
Fig. 5 is a schematic diagram illustrating still another example of the configuration of the power supply device according to the first embodiment.
Fig. 6 is a block diagram illustrating an example of a configuration of a power supply device according to a second embodiment.
Fig. 7 is a circuit diagram illustrating an example of a configuration of a power supply device according to a third embodiment.
Fig. 8 is a circuit diagram of a voltage detection circuit, a comparator power supply circuit, and a direct-current part voltage comparator illustrated in Fig. 7.
Fig. 9 is a circuit diagram of a first power supply circuit, a second power supply circuit, and a power source switcher illustrated in Fig. 7.
Fig. 10 is a circuit diagram illustrating another example of the first power supply circuit.
Fig. 11 is a circuit diagram illustrating still another example of the first power supply circuit.
Fig. 12 is a circuit diagram illustrating still another example of the first power supply circuit.
Fig. 13 is a circuit diagram illustrating still another example of the first power supply circuit.
Fig. 14 is a circuit diagram illustrating still another example of the first power supply circuit.
Fig. 15 is a circuit diagram illustrating an example of a switching power source.
Fig. 16 is a block diagram illustrating another configuration example for selecting the first power supply circuit and the second power supply circuit.
Fig. 17 is a circuit diagram illustrating an example of a drive circuit illustrated in Fig. 7.
Fig. 18 is a timing chart illustrating an example of a first output voltage of the first power supply circuit, a second output voltage of the second power supply circuit, and a stop signal.
Fig. 19 is a circuit diagram for explaining an example of an excessive voltage protection circuit and a drive circuit in a power supply device according to a fourth embodiment.
Fig. 20 is a circuit diagram for explaining another example of the excessive voltage protection circuit and the drive circuit in the power supply device according to the fourth embodiment.
Fig. 21 is a circuit diagram for explaining still another example of the excessive voltage protection circuit and the drive circuit in the power supply device according to the fourth embodiment.

### DESCRIPTION OF EMBODIMENTS

### <First Embodiment>

### (1) Overall Configuration

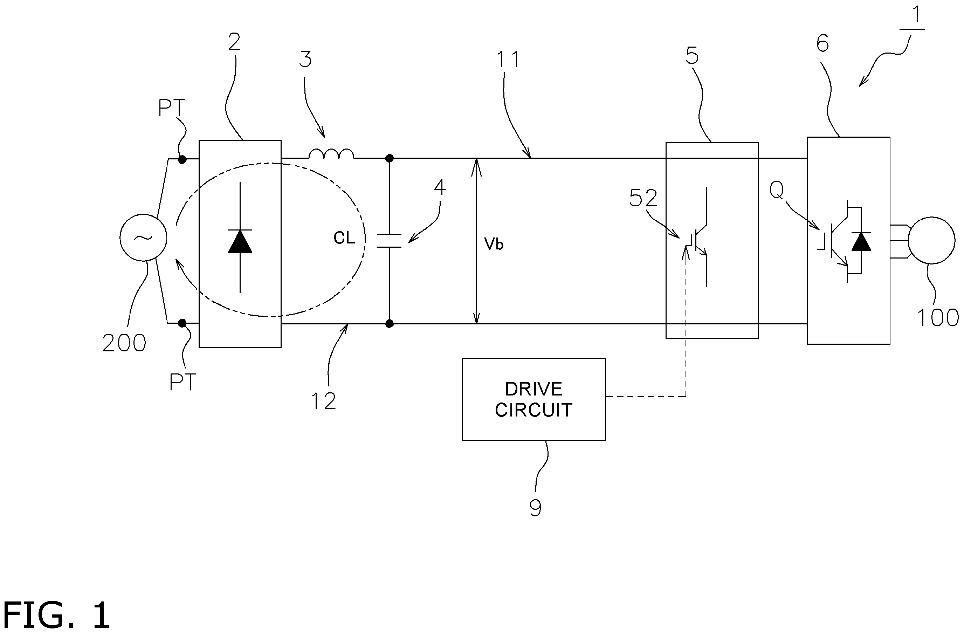

Fig. 1 illustrates an example of a configuration of a power supply device 1 according to a first embodiment. The power supply device 1 illustrated in Fig. 1 includes power source terminals PT to which power is supplied from a power source 200, and a first direct-current bus 11 and a second direct-current bus 12 to which a direct-current voltage is applied. The second direct-current bus 12 has a lower potential than a potential in the first direct-current bus. Furthermore, the power supply device 1 includes a capacitor 4 coupled between the first direct-current bus 11 and the second direct-current bus 12. The power supply device 1 converts power supplied to the first direct-current bus 11 and the second direct-current bus 12 and supplies the converted power to a load 100.

To apply a direct-current voltage to the first direct-current bus 11 and the second direct-current bus 12, an alternating-current power source is used as the power source 200, and a rectifier 2 that rectifies an alternating-current voltage of the power source 200 into a direct-current voltage is inserted in a wiring path from the power source terminals PT to the first direct-current bus 11 and the second direct-current bus 12, as illustrated in the power supply device 1 illustrated in Fig. 1, for example. However, the power source 200 is not limited to an alternating-current power source. For example, the power source 200 may be a direct-current power source. When the power source 200 is a direct-current power source, for example, the rectifier 2 is omitted.

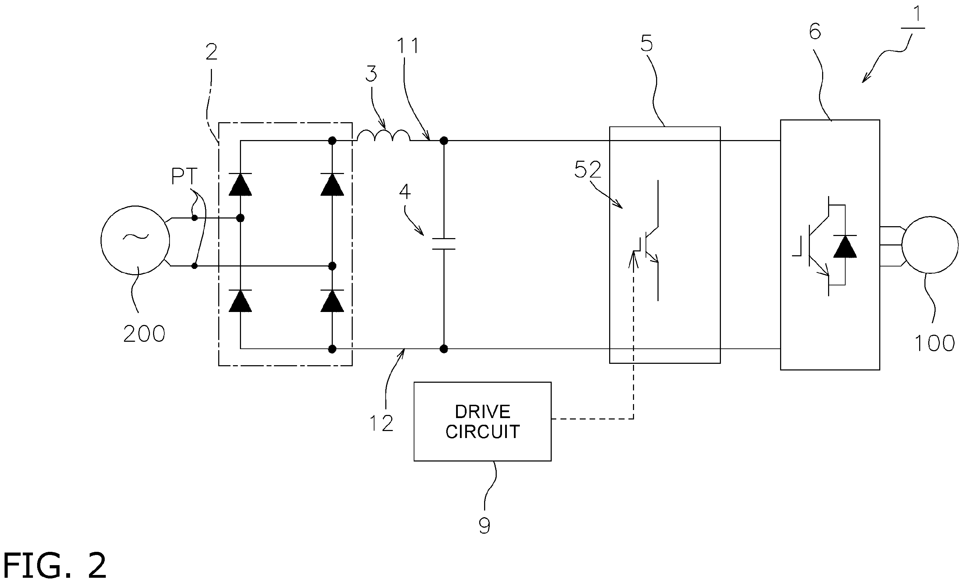

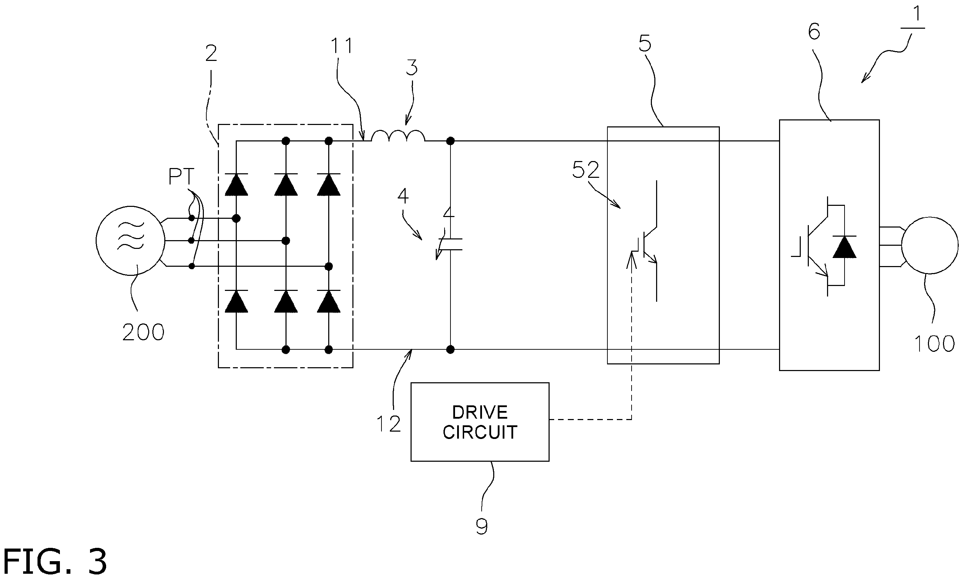

The power supply device 1 includes an inductor 3 inserted in the wiring path from the power source terminal PT to the first direct-current bus 11 or the second direct-current bus 12. The power supply device 1 may include one or a plurality of inductors 3. In the power supply device 1 illustrated in Fig. 1, the inductor 3 is inserted in series in the first direct-current bus 11. Figs. 2 to 5 illustrate examples in which the inductor 3 is inserted in the wiring path from the power source terminals PT to the first direct-current bus 11 and the second direct-current bus 12. For example, Fig. 2 illustrates an example in which the rectifier 2 is a bridge rectifier circuit that rectifies a single-phase alternating current, and the inductor 3 is inserted in series in the first direct-current bus 11. A position at which the inductor 3 is inserted, as illustrated in Fig. 2, is on an output side of a direct-current voltage of the bridge rectifier circuit that rectifies a single-phase alternating current. For example, Fig. 3 illustrates an example in which the rectifier 2 is a bridge rectifier circuit that rectifies a three-phase alternating current, and the inductor 3 is inserted in series in the first direct-current bus 11. A position at which the inductor 3 is inserted, as illustrated in Fig. 3, is on an output side of a direct-current voltage of the bridge rectifier circuit that rectifies a three-phase alternating current. Figs. 2 and 3 illustrate the examples in which the inductor 3 is inserted in the wiring path from the rectifier 2 to the first direct-current bus 11, at a location closer to the first direct-current bus 11 than the power source terminal PT. Note that, although Figs. 2 and 3 illustrate the examples in which the inductor 3 is inserted in the first direct-current bus 11, the inductor 3 may be inserted in the second direct-current bus 12 on the output side of the direct-current voltage of the bridge rectifier circuit. Furthermore, the inductor 3 may be inserted on both an input side of an alternating-current voltage and the output side of the direct-current voltage of the bridge rectifier circuit.

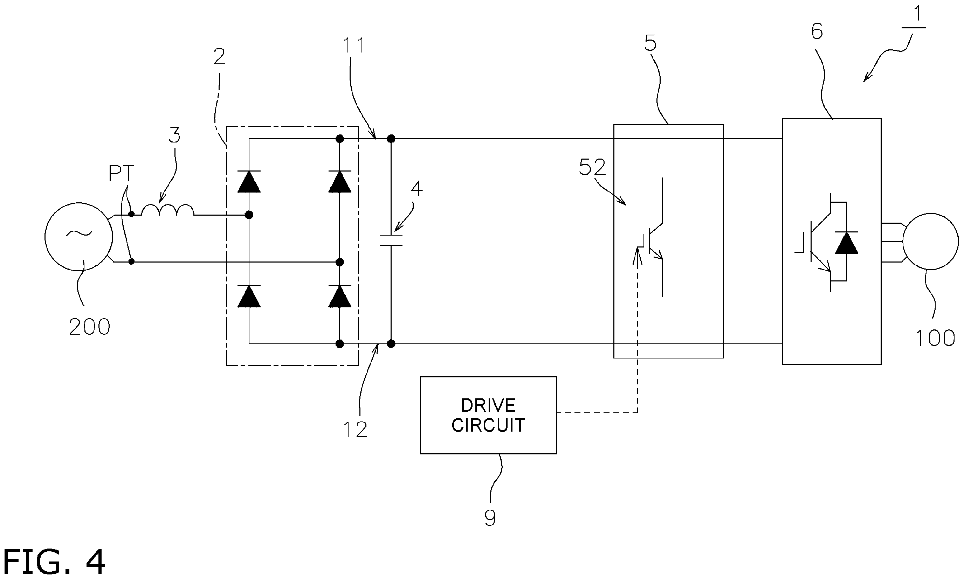

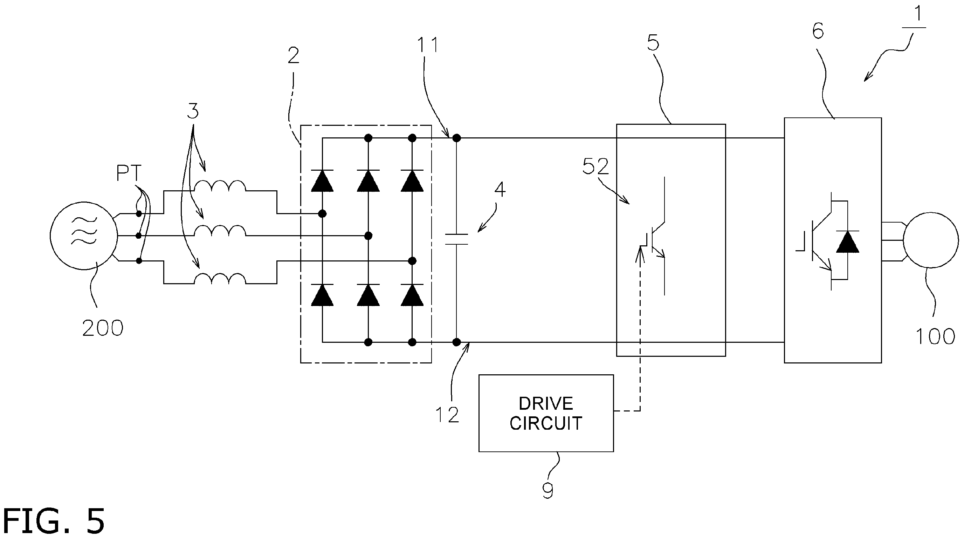

For example, Fig. 4 illustrates an example in which the rectifier 2 is a bridge rectifier circuit that rectifies a single-phase alternating current, and the inductor 3 is disposed between one of the power source terminals PT and the bridge rectifier circuit that rectifies a single-phase alternating current. A position at which the inductor 3 is inserted, as illustrated in Fig. 4, is on the input side of the alternating-current voltage of the bridge rectifier circuit that rectifies a single-phase alternating current. For example, Fig. 4 illustrates an example in which the rectifier 2 is a bridge rectifier circuit that rectifies a three-phase alternating current, and the inductor 3 is disposed between one of the power source terminals PT and the bridge rectifier circuit that rectifies a three-phase alternating current. A position at which the inductor 3 is inserted, as illustrated in Fig. 4, is the input side of the alternating-current voltage of the bridge rectifier circuit that rectifies a three-phase alternating current. Figs. 4 and 5 illustrate the examples in which the inductor 3 is inserted in the wiring path between the rectifier 2 and one or more of the power source terminals PT, at a location closer to the power source terminals PT than the first direct-current bus 11. Note that, although Fig. 4 illustrates the example in which the inductor 3 is inserted between one of the power source terminals PT and the rectifier 2, two inductors 3 may be each inserted between each of the power source terminals PT and the rectifier 2. Furthermore, inductors 3 may be inserted on both the input side of the alternating-current voltage and the output side of the direct-current voltage of the bridge rectifier circuit.

The power supply device 1 illustrated in Fig. 1 further includes an inverter circuit 6 serving as a circuit device, an excessive voltage protection circuit 5, and a drive circuit 9. The inverter circuit 6 serving as the circuit device is coupled between the first direct-current bus 11 and the second direct-current bus 12. Note herein that, although the inverter circuit 6 is provided as an example of the circuit device, the circuit device is not limited to the inverter circuit 6, and may be a circuit device other than the inverter circuit 6 as long as the circuit device is supplied with an inter-line voltage applied between the first direct-current bus 11 and the second direct-current bus 12.

The excessive voltage protection circuit 5 is coupled between the first direct-current bus 11 and the second direct-current bus 12. The excessive voltage protection circuit 5 includes a semiconductor switch 52. The excessive voltage protection circuit 5 performs operation of protecting the circuit device, such as the inverter circuit 6 illustrated in Fig. 1, against an excessive voltage when the semiconductor switch 52 is turned on. The drive circuit 9 drives the semiconductor switch 52. The excessive voltage protection circuit 5 turns off the semiconductor switch 52 at a voltage equal to or lower than a predetermined voltage at which protection against an excessive voltage is not provided, preventing a current from flowing. Note herein that the term "excessive voltage" refers to a voltage at which the circuit device is not able to operate normally or the circuit device is damaged. Therefore, the predetermined voltage described above refers to a voltage lower than the excessive voltage and higher than an inter-line voltage between the first direct-current bus 11 and the second direct-current bus 12 when stability is attained. Note that a target to be protected against the excessive voltage may be the capacitor 4 or the rectifier 2.

The drive circuit 9 is supplied with driving power as power is supplied to the power source terminals PT. The drive circuit 9 is configured to enter a drivable state in which the semiconductor switch 52 is able to be turned on in a first period of time from when a direct-current voltage starts to rise along with start of power supply to the power source terminals PT to a half cycle of resonance generated in a closed circuit CL. The closed circuit CL refers to a closed circuit including the power source 200, the capacitor 4, and the inductor 3. The closed circuit CL is indicated by a two dot chain line in Fig. 1.

When power supply to the power source terminals PT is started, in the power supply device 1 illustrated in Fig. 1, the rectifier 2 starts to apply a direct-current voltage to the first direct-current bus 11 and the second direct-current bus 12. When an amount of charge stored in the capacitor 4 has decreased since power supply to the power source terminals PT has been stopped for a certain period of time, and when power supply to the power source terminals PT is then started, an inter-line voltage Vb between the first direct-current bus 11 and the second direct-current bus 12 starts to rise from zero or a very small voltage. When the direct-current voltage applied to the first direct-current bus 11 and the second direct-current bus 12 changes in this way, series resonance occurs due to a capacitance component of the capacitor 4 and an inductance component of the inductor 3 coupled in series in the closed circuit CL. Although, in addition to the capacitor 4 and the inductor 3, a capacitance component, an inductance component, and a resistance component exist in the closed circuit CL, series resonance occurs since the capacitor 4 and the inductor 3 are disposed in series in the closed circuit CL.

The drive circuit 9 is supplied with power from the first direct-current bus 11 and the second direct-current bus 12. Therefore, when a direct-current voltage between the first direct-current bus 11 and the second direct-current bus 12 is zero or very small and close to zero, the drive circuit 9 is not able to turn on the semiconductor switch 52. It can be said that such a state is not the drivable state.

The series resonance generated in the closed circuit CL along with start of power supply to the power source terminals PT reaches a peak at a half cycle of a resonance cycle after the direct-current voltage starts to rise. Therefore, when the drive circuit 9 enters the drivable state in the first period of time from when the direct-current voltage starts to rise to a half cycle of resonance generated in the closed circuit CL, it is possible to turn on the semiconductor switch 52 before a voltage superimposed due to the series resonance reaches the peak. As a result, before the inverter circuit 6 serving as the circuit device reaches an excessive voltage due to resonance generated when the direct-current voltage starts to rise, it is possible to turn on the semiconductor switch 52 in the excessive voltage protection circuit 5 to suppress application of an excessive voltage to the inverter circuit 6. The excessive voltage protection circuit 5 thus makes it possible to improve the power supply device 1 configured as described above in protection reliability against an excessive voltage.

Note that, when the power source 200 is an alternating-current power source, there is a condition under which an excessive voltage easily occurs depending on a phase of an inter-line voltage and a frequency of a power source at a timing when the power source starts to rise. For a phase condition, it is around a phase at which a voltage acquired after rectification has been performed on a voltage of an alternating-current power source becomes maximum, and is around 90° or 270° in a single-phase alternating-current power source. Furthermore, as a frequency of a power source lowers, compared with a resonant frequency, an excessive voltage easily occurs around these phases. Note that, in a three-phase alternating-current power source, an excessive voltage easily occurs when a phase of a phase voltage is around 30°, 90°, 150°, 210°, 270°, and 330°.

### (2) Operation of Drive Circuit 9

The drive circuit 9 compares the inter-line voltage Vb between the first direct-current bus 11 and the second direct-current bus with a first threshold voltage Vt1 that is higher than the inter-line voltage Vb when stability is attained, and turns on the semiconductor switch 52 when the inter-line voltage Vb exceeds the first threshold voltage Vt1. Note herein that the term "when stability is attained" refers to a state when oscillation of a direct-current voltage due to resonance generated in the closed circuit CL is converged.

### (3) Example of Circuit Device

The circuit device is the inverter circuit 6 that is coupled between the first direct-current bus 11 and the second direct-current bus 12 and that includes a semiconductor element Q.

### (4) Capacitor 4

The capacitor 4 does not have such a capacitance as to smooth voltage fluctuations that occur in the first direct-current bus 11 and the second direct-current bus 12 due to the rectifier 2, but has such a capacitance as to suppress voltage fluctuations that occur as switching occurs in the inverter circuit 6. In other words, the capacitor 4 is provided not as a smoothing capacitor such as an ordinary electrolytic capacitor, but is provided to remove a high-frequency component generated in the inverter circuit 6. Therefore, the capacitor 4 has a small capacitance. An upper limit for the capacitance of the capacitor 4 is, for example, such a capacitance at which a maximum value of a voltage between two terminals of the capacitor 4 is twice or more of a minimum value when an alternating current to be rectified by the rectifier 2 is a single-phase alternating current. Furthermore, an upper limit for a capacitance C of the capacitor 4 is acquired with C ≤ 350 × 10⁻⁶ × (Pmax/Vac²), where Vac is a power source voltage of the power source 200, which the rectifier 2 rectifies, and Pmax is maximum power of alternating-current power that the inverter circuit 6 outputs, when the rectifier 2 rectifies a three-phase alternating current.

However, when the capacitance of the capacitor 4 is very small, a very large voltage ripple is generated in the capacitor 4 as switching occurs in the inverter circuit 6. Therefore, a capacitance for suppressing a voltage ripple within a certain range is necessary. As a guide, it is assumed that the capacitance be equal to or larger than a capacitance at which a ripple of a capacitor voltage generated as switching operation of the inverter circuit 6 occurs is equal to or smaller than 1/10 of a capacitor average voltage.

### (5) Method of Determining Period of Time until Drive Circuit 9 enters Drivable State

It is possible that an inter-line voltage between the first direct-current bus 11 and the second direct-current bus 12 is actually measured when the power source is turned on, a half of a resonance cycle of a generated resonance phenomenon is measured, and a period of time shorter than the measured half of the resonance cycle is determined as a period of time until the drive circuit 9 enters the drivable state.

Furthermore, a parasitic inductance component normally exists between the power source terminals PT and the power source 200. A resonance cycle when such a parasitic inductance component exists is longer than a resonance cycle in a closed circuit including only the inductor 3 and the capacitor 4. Therefore, a resonance cycle may be calculated from a value of an inductance that the inductor 3 has and a value of a capacitance that the capacitor 4 has, and a period of time, which is equal to or shorter than a half of the calculated resonance cycle, until the drive circuit 9 enters the drivable state may be determined. Although, when the period of time is determined in this way, the drive circuit 9 enters the drivable state in a shorter period of time than a period of time determined through actual measurement as described above, such determination is directed to higher safety, which leads to no problem.

For example, a resonance cycle T when the power source 200 supplies a single-phase alternating current to the power source terminals PT is acquired with T = 2π(LC)^{1/2}.

For example, when the power source 200 supplies a three-phase alternating current to the power source terminals PT, inductances of the inductors 3 in the phases, which are disposed on the alternating-current side of the rectifier 2, as illustrated in Fig. 5, are designated as L1, L2, and L3. A circuit for charging the capacitor 4 when the power source is turned on is a closed circuit in which two phases where an inter-line voltage between the first direct-current bus 11 and the second direct-current bus 12 becomes maximum are used as current paths. When the inductances of the inductors 3 in the two phases are L1 and L2, and the capacitance of the capacitor 4 is C, the cycle T of resonance generated by the inductors 3 and the capacitor 4 is acquired with T = 2π((L1 + L2)·C)^{1/2}.

### <Second Embodiment>

### (6) Overall Configuration

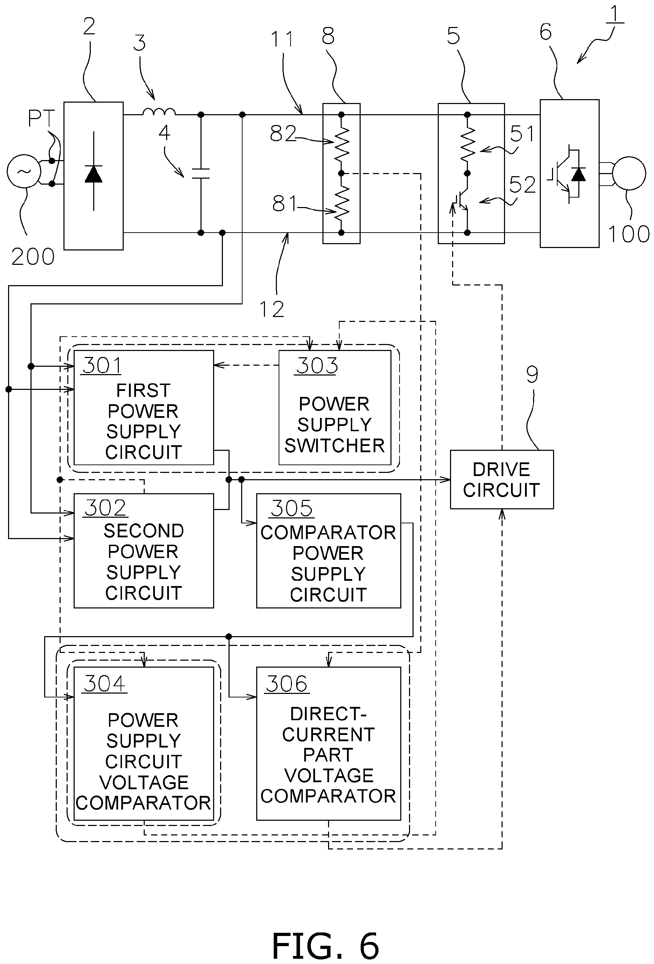

Fig. 6 illustrates an example of a configuration of a power supply device 1 according to a second embodiment. The power supply device 1 illustrated in Fig. 6 includes the power source terminals PT to which power is supplied from the power source 200, the first direct-current bus 11 and the second direct-current bus 12 to which a direct-current voltage is applied, the inductor 3, the capacitor 4, the inverter circuit 6 serving as the circuit device, the excessive voltage protection circuit 5, and the drive circuit 9. These components according to the second embodiment illustrated in Fig. 6 are similar or identical to those components according to the first embodiment illustrated in Fig. 1, and their descriptions are therefore omitted in here.

The power supply device 1 according to the second embodiment includes a first power supply circuit 301 and a second power supply circuit 302. The first power supply circuit 301 and the second power supply circuit 302 are circuits that operate as direct-current power is supplied from the first direct-current bus 11 and the second direct-current bus 12. The first power supply circuit 301 supplies power to the drive circuit 9 in a predetermined period of time including the first period of time as power is supplied to the power source terminals PT. The second power supply circuit 302 supplies power to the drive circuit 9 in a second period of time after the predetermined period of time has elapsed. In other words, the power supply device 1 performs switching in such a manner that power is supplied from the first power supply circuit 301 to the drive circuit 9 until the predetermined period of time has elapsed and power is supplied from the second power supply circuit 302 to the drive circuit 9 after the predetermined period of time has elapsed.

The first power supply circuit 301 controls a first output voltage to be outputted to the drive circuit 9 to be a voltage satisfying the drivable state within the first period of time. The second power supply circuit 302 outputs a second output voltage to the drive circuit 9. The first power supply circuit 301 stops after the second output voltage of the second power supply circuit 302 reaches a voltage satisfying the drivable state. The first power supply circuit 301 has a smaller power capacity than a power capacity of the second power supply circuit 302. The first power supply circuit 301 is a dedicated power supply circuit that supplies power to a minimum number of circuits necessary for turning on or off the semiconductor switch 52, including at least the drive circuit 9. On the other hand, the second power supply circuit 302 is a multi-purpose power supply circuit that supplies power to not only the drive circuit 9, but also circuits other than the circuits necessary for turning on or off the semiconductor switch 52. Since the first power supply circuit 301 is a dedicated power supply circuit that supplies power to the necessary minimum number of circuits, as described above, it is possible to allow the first output voltage to rise easily and promptly.

Instead of providing the first power supply circuit 301 as provided in the second embodiment, it is also possible to construct only one power supply circuit that combines the functions of both the first power supply circuit 301 and the second power supply circuit 302. In this case, however, the one power supply circuit is configured such that the first output voltage outputted to the drive circuit 9 reaches a voltage satisfying the drivable state within the first period of time, and is configured to also supply power to circuits other than the drive circuit 9 after the predetermined period of time has elapsed. Therefore, it is necessary that the one power supply circuit be a circuit that is larger in size, higher in performance, and greater in power consumption.

### (7) Detailed Configuration

### (7-1) Switching between First Power Supply Circuit 301 and Second Power Supply Circuit 302

The power supply device 1 illustrated in Fig. 6 includes a power source switcher 303 for performing switching between the first power supply circuit 301 and the second power supply circuit 302. The power source switcher 303 outputs a stop signal for stopping the first power supply circuit 301 after the second output voltage of the second power supply circuit 302 reaches a voltage satisfying the drivable state. Upon reception of the stop signal from the power source switcher 303, the first power supply circuit 301 stops outputting of the first output voltage.

To allow the power source switcher 303 to determine a timing of stopping the first power supply circuit 301, the power supply device 1 illustrated in Fig. 6 includes a power supply circuit voltage comparator 304. The second output voltage of the second power supply circuit 302 is supplied to the power source switcher 303 and the power supply circuit voltage comparator 304. Since the second output voltage is a voltage satisfying the drivable state, the power source switcher 303 is able to operate with the second output voltage of the second power supply circuit 302. The power supply circuit voltage comparator 304 compares a switching threshold value and the second output voltage with each other. When the second output voltage becomes equal to or higher than the switching threshold value, the second output voltage has become a voltage satisfying the drivable state. When the second output voltage becomes equal to or higher than the switching threshold value, the power supply circuit voltage comparator 304 outputs a signal for causing the first power supply circuit 301 to stop outputting of the first output voltage.

The power supply device 1 includes a comparator power supply circuit 305 that supplies power to the power supply circuit voltage comparator 304 and a direct-current part voltage comparator 306. The comparator power supply circuit 305 is supplied with power from the first power supply circuit 301 and the second power supply circuit 302. The comparator power supply circuit 305 first operates with the first output voltage of the first power supply circuit 301, and then operates with the second output voltage of the second power supply circuit 302 to supply power to the power supply circuit voltage comparator 304. Therefore, the power supply circuit voltage comparator 304 is able to operate relatively promptly, compared with a case when operating only with the second output voltage of the second power supply circuit 302 without using the first output voltage of the first power supply circuit 301.

### (7-2) Switching of On or Off of Drive Circuit 9

The power supply device 1 illustrated in Fig. 6 includes a voltage detection circuit 8. The voltage detection circuit 8 is coupled between the first direct-current bus 11 and the second direct-current bus 12. The voltage detection circuit 8 includes resistors 81 and 82 coupled in series between the first direct-current bus 11 and the second direct-current bus 12. The resistors 81 and 82 divide an inter-line voltage between the first direct-current bus 11 and the second direct-current bus 12. A voltage between two terminals of the resistor 81, which has been acquired by dividing the inter-line voltage, is outputted to the direct-current part voltage comparator 306. The direct-current part voltage comparator 306 performs comparison with the first threshold voltage Vt1 that is higher than the inter-line voltage when stability is attained. When the inter-line voltage becomes higher than the first threshold voltage Vt1, the direct-current part voltage comparator 306 outputs, to the drive circuit 9, a signal for turning on the semiconductor switch 52. When the inter-line voltage is equal to or lower than the first threshold voltage Vt1, the direct-current part voltage comparator 306 outputs, to the drive circuit 9, a signal for turning off the semiconductor switch 52.

### (7-3) Excessive Voltage Protection Circuit 5

The excessive voltage protection circuit 5 includes a resistor 51 and a semiconductor switch 52 coupled to each other in series. One terminal of the resistor 51 is coupled to the first direct-current bus 11, and another terminal of the resistor 51 is coupled to one terminal of the semiconductor switch 52. Another terminal of the semiconductor switch 52 is coupled to the second direct-current bus 12. The semiconductor switch 52 is a semiconductor switch for which it is possible to be freely turned on or off, and is a transistor, for example. The transistor applicable to the semiconductor switch 52 may be, for example, a bipolar transistor (BJT), an insulated-gate type bipolar transistor (IGBT), or a field-effect transistor (FET). When the semiconductor switch 52 is an N-channel IGBT, an emitter is coupled to the second direct-current bus 12, and a collector is coupled to the other terminal of the resistor 51. A voltage signal for performing switching of on or off of the excessive voltage protection circuit 5 is outputted from the drive circuit 9 to a gate of the insulated-gate type bipolar transistor. Since, in the excessive voltage protection circuit 5, the resistor 51 mainly consumes power, it is possible to use a semiconductor element having a smaller power capacity, compared with an excessive voltage protection circuit using a Zener diode.

### <Third Embodiment>

### (8) Overall Configuration

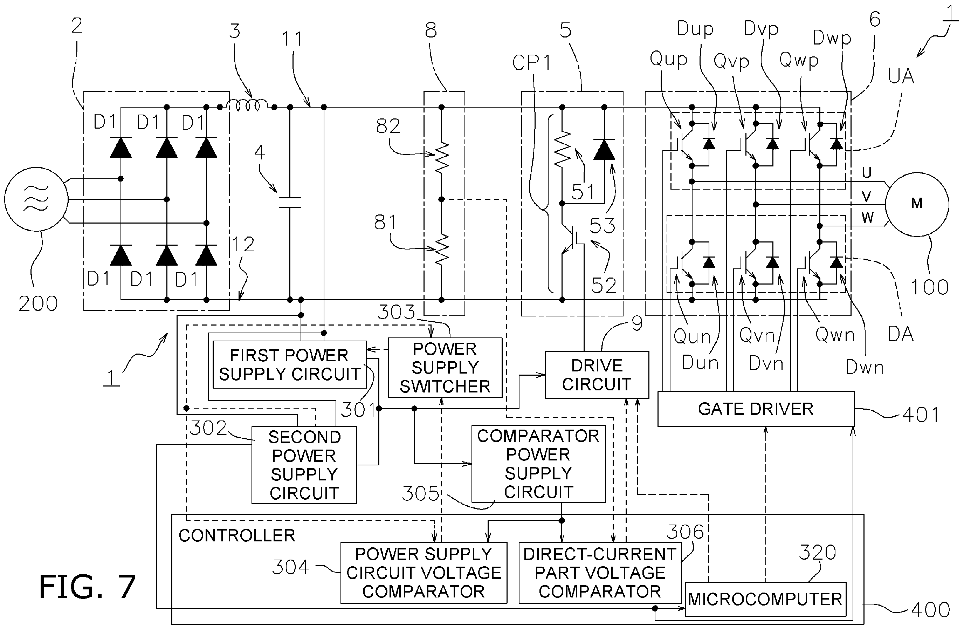

Fig. 7 illustrates an example of a configuration of a power supply device 1 according to a third embodiment. The power supply device 1 illustrated in Fig. 7 includes the power source terminals PT to which power is supplied from the power source 200, the first direct-current bus 11 and the second direct-current bus 12 to which a direct-current voltage is applied, the inductor 3, the capacitor 4, the inverter circuit 6 serving as the circuit device, the excessive voltage protection circuit 5, and the drive circuit 9. These components according to the third embodiment illustrated in Fig. 6 are similar or identical to those components according to the first embodiment illustrated in Fig. 1.

The power supply device 1 according to the third embodiment illustrated in Fig. 7 includes the voltage detection circuit 8, the first power supply circuit 301, the second power supply circuit 302, the power source switcher 303, the power supply circuit voltage comparator 304, the comparator power supply circuit 305, and the direct-current part voltage comparator 306. These components according to the third embodiment illustrated in Fig. 7 are similar or identical to those components according to the second embodiment illustrated in Fig. 6.

### (8-1) Supplying of Direct-current Power to First Direct-current Bus 11 and Second Direct-current Bus 12

A direct-current voltage is applied from the rectifier 2 to the first direct-current bus 11 and the second direct-current bus 12 illustrated in Fig. 7. The rectifier 2 illustrated in Fig. 7 is supplied with three-phase alternating-current power from the power source 200. The rectifier 2 illustrated in Fig. 7 is a rectifier circuit that rectifies a three-phase alternating current. The rectifier circuit forming the rectifier 2 is a three-phase bridge rectifier circuit including six diodes D1. Note herein that, although the three-phase bridge rectifier circuit is exemplified as the rectifier 2, the rectifier 2 is not limited to the three-phase bridge rectifier circuit. For example, a single-phase bridge rectifier circuit may be used as the rectifier 2.

The inductor 3 is inserted in series in the first direct-current bus 11 illustrated in Fig. 7. The inductor 3 is provided to reduce higher harmonic waves generated in a direct-current link including the first direct-current bus 11 and the second direct-current bus 12. As described in the first embodiment, the position at which the inductor 3 is inserted may be elsewhere; for example, the inductor 3 may be provided on the second direct-current bus 12, or between the power source 200 and the rectifier 2.

In the first direct-current bus 11 in the power supply device 1 illustrated in Fig. 7, the rectifier 2, the inductor 3, the one terminal of the capacitor 4, one terminal of the voltage detection circuit 8, one terminal of the excessive voltage protection circuit 5, and an upper arm UA of the inverter circuit 6 are disposed in this order. In the second direct-current bus 12 in the power supply device 1 illustrated in Fig. 7, the rectifier 2, the other terminal of the capacitor 4, another terminal of the voltage detection circuit 8, another terminal of the excessive voltage protection circuit 5, and a lower arm DA of the inverter circuit 6 are disposed in this order. A direct-current voltage is applied between the one terminal and the other terminal of the capacitor 4 through the first direct-current bus 11 and the second direct-current bus 12. Furthermore, through the first direct-current bus 11 and the second direct-current bus 12, a direct-current voltage is applied between the one terminal and the other terminal of the voltage detection circuit 8, a direct-current voltage is applied between the one terminal and the other terminal of the excessive voltage protection circuit 5, and a direct-current voltage is applied between the upper arm UA and the lower arm DA of the inverter circuit 6.

### (8-2) Inverter Circuit 6

The inverter circuit 6 illustrated in Fig. 7 converts direct-current power supplied to the first direct-current bus 11 and the second direct-current bus 12 into three-phase alternating-current power and supplies the converted power to the load 100. The load 100 illustrated in Fig. 7 is an inductive load. In Fig. 7, a three-phase alternating-current motor is illustrated as an example of the inductive load. The inverter circuit 6 illustrated in Fig. 7 is a circuit that converts direct-current power supplied to the first direct-current bus 11 and the second direct-current bus 12 into three-phase alternating-current power and supplies the converted power.

The upper arm UA includes three semiconductor switches. The upper arm UA includes, for example, three transistors as semiconductor switches. The transistors are, for example, N-channel, insulated-gate type bipolar transistors Qup, Qvp, and Qwp, as illustrated in Fig. 7. Hereinafter, the insulated-gate type bipolar transistors may be abbreviated as IGBTs. The IGBTs Qup, Qvp, and Qwp each have a collector coupled to the first direct-current bus 11, an emitter coupled to the load 100, and a gate coupled to a gate driver 21. The IGBTs Qup, Qvp, and Qwp are coupled to freewheeling diodes Dup, Dvp, and Dwp in an anti-parallel manner. In other words, cathodes of the freewheeling diodes Dup, Dvp, and Dwp are coupled to the collectors of the IGBTs Qup, Qvp, and Qwp, respectively, and anodes of the freewheeling diodes Dup, Dvp, and Dwp are coupled to the emitters of the IGBTs Qup, Qvp, and Qwp, respectively.

The lower arm DA includes three semiconductor switches. The lower arm DA includes, for example, three transistors as semiconductor switches. The transistors are, for example, N-channel, insulated-gate type bipolar transistors Qun, Qvn, and Qwn, as illustrated in Fig. 2. The IGBTs Qun, Qvn, and Qwn each have an emitter coupled to the second direct-current bus 12, a collector coupled to the load 100, and a gate coupled to the gate driver 21. The IGBTs Qun, Qvn, and Qwn are coupled to freewheeling diodes Dun, Dvn, and Dwn in an anti-parallel manner. In other words, cathodes of the freewheeling diodes Dun, Dvn, and Dwn are coupled to the collectors of the IGBTs Qun, Qvn, and Qwn, respectively, and anodes of the freewheeling diodes Dun, Dvn, and Dwn are coupled to the emitters of the IGBTs Qun, Qvn, and Qwn, respectively. AU-phase of the load 100 is supplied with outputs from the emitter of the IGBT Qup and the collector of the IGBT Qun. A V-phase of the load is supplied with outputs from the emitter of the IGBT Qvp and the collector of the IGBT Qvn. AW phase of the load 100 is supplied with outputs from the emitter of the IGBT Qwp and the collector of the IGBT Qwn.

### (8-3) Voltage Detection Circuit 8

The voltage detection circuit 8 is a circuit for detecting a voltage generated between the first direct-current bus 11 and the second direct-current bus 12. The voltage detection circuit 8 detects an inter-line voltage generated between the first direct-current bus 11 and the second direct-current bus 12, between the capacitor 4 and the inverter circuit 6. The voltage detection circuit 8 is a circuit including the resistors 81 and 82 coupled in series between the first direct-current bus 11 and the second direct-current bus 12. The voltage detection circuit 8 outputs a voltage between the two terminals of the resistor 81 to the direct-current part voltage comparator 306. The direct-current part voltage comparator 306 performs comparison with the first threshold voltage Vt1.

### (8-4) Basic Configuration of Excessive Voltage Protection Circuit 5

The excessive voltage protection circuit 5 illustrated in Fig. 7 is basically a circuit including the semiconductor switch 52 and the resistor 51 coupled in series between the first direct-current bus 11 and the second direct-current bus 12. In Fig. 2, the one terminal of the resistor 51 is coupled to the first direct-current bus 11. The other terminal of the resistor 51 is coupled to the one terminal of the semiconductor switch 52. The other terminal of the semiconductor switch 52 is coupled to the second direct-current bus 12. Although, in Fig. 7, the resistor 51 is coupled to the first direct-current bus 11, and the semiconductor switch 52 is coupled to the second direct-current bus 12, the excessive voltage protection circuit 5 may be configured by replacing the resistor 51 and the semiconductor switch 52 with each other in position. In the power supply device 1 illustrated in Fig. 7, the semiconductor switch 52 is an N-channel IGBT. The collector is coupled to the other terminal of the resistor 51, the emitter is coupled to the second direct-current bus 12, and the gate is coupled to the drive circuit 9. In the excessive voltage protection circuit 5, a current flows through a first current path CP1 when the semiconductor switch 52 is turned on. By passing current through the first current path CP1, power is consumed by the resistor 51, thereby protecting the inverter circuit 6 from excessive voltage.

### (8-4-1) Detailed Configuration of Excessive Voltage Protection Circuit 5

The excessive voltage protection circuit 5 illustrated in Fig. 7 further includes a diode 53 coupled in an anti-parallel manner to the resistor 51. A cathode of the diode 53 is coupled to the first direct-current bus 11, and an anode is coupled to the one terminal of the semiconductor switch 52. When the semiconductor switch 52 is turned off, a current flowing through the first current path (the resistor 51 and the semiconductor switch 52) is cut off. When an inductance component exists in a circuit including the excessive voltage protection circuit 5, an electromotive force that generates a voltage between the two terminals of the resistor 51 is generated. The diode 53 clamps a voltage generated between the two terminals of the resistor 51 to prevent a large voltage from being generated at the two terminals of the resistor 51 as the semiconductor switch 52 is turned off. Although the diode 53 is provided in the excessive voltage protection circuit 5 illustrated in Fig. 7, the excessive voltage protection circuit 5 without the diode 53 as described above may be used in the power supply device 1.

### (8-4-2) Protection against Excessive Voltage by Excessive Voltage Protection Circuit 5

An inter-line voltage generated between the first direct-current bus 11 and the second direct-current bus 12 is compared with the first threshold voltage Vt1 in the direct-current part voltage comparator 306. When the inter-line voltage exceeds the first threshold voltage Vt1, a signal for turning on the semiconductor switch 52 is transmitted from the direct-current part voltage comparator 306 to the drive circuit 9. When the semiconductor switch 52 in the excessive voltage protection circuit 5 is turned on, a current flows through the first current path CP1 (the resistor 51 and the semiconductor switch 52) to suppress an excessive voltage, protecting the inverter circuit 6. When the inter-line voltage becomes equal to or lower than a second threshold voltage Vt2 that is lower than the first threshold voltage Vt1, the semiconductor switch 52 is turned off, stopping the excessive voltage protection circuit 5 from operating.

### (8-4-3) Comparator Power Supply Circuit 305

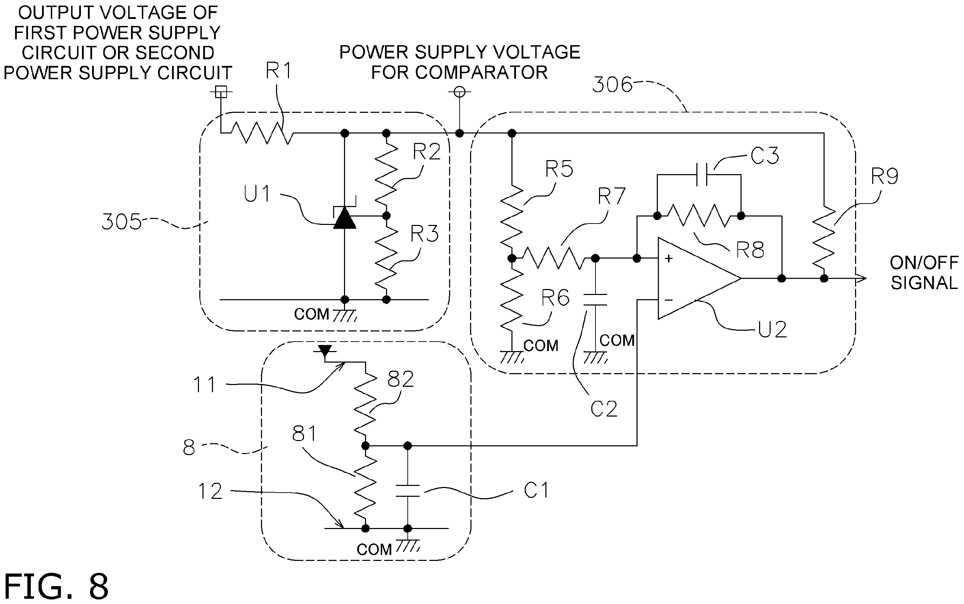

Fig. 8 illustrates an example of a circuit configuration of the comparator power supply circuit 305. The comparator power supply circuit 305 includes resistors R1, R2, and R3 and a shunt regulator U1. As will be described later, when at least one of the first power supply circuit 301 and the second power supply circuit 302 is operating, a voltage is applied to one terminal of the resistor R1 from the at least one of the first power supply circuit 301 and the second power supply circuit 302. For example, when application of a direct-current voltage to the first direct-current bus 11 and the second direct-current bus 12 is started, the first output voltage is first applied from the first power supply circuit 301, and then the second output voltage is applied from the second power supply circuit 302. A cathode of the shunt regulator U1 is coupled to another terminal of the resistor R1, and an anode is coupled to a common line COM. A potential in the common line COM is identical to that in the second direct-current bus 12. Furthermore, a voltage divided by the resistors R2 and R3 coupled to each other in series between the other terminal of the resistor R1 and the common line COM is applied to a reference of the shunt regulator U1. A constant voltage is generated between the two terminals (between the cathode and the anode) of the shunt regulator U1. A value of the constant voltage generated between the two terminals of the shunt regulator U1 is determined by the resistors R2 and R3. A driving voltage is outputted from a coupling point between the other terminal of the resistor R1 and the cathode of the shunt regulator U1 to the power supply circuit voltage comparator 304 and the direct-current part voltage comparator 306. Note that, in the comparator power supply circuit, a Zener diode or a three-terminal regulator may be used, instead of the shunt regulator, for example.

### (8-4-4) Voltage Detection Circuit 8

Fig. 8 illustrates an example of a circuit configuration of the voltage detection circuit 8. The voltage detection circuit 8 illustrated in Fig. 8 includes a capacitor C1, in addition to the resistors 81 and 82 described above. The capacitor C1 is coupled between a coupling point of the resistors 81 and 82 and the second direct-current bus 12. The capacitor C1 has a function of removing high-frequency noise generated at the coupling point of the resistors 81 and 82, for example.

### (8-4-5) Direct-current Part Voltage Comparator 306

Fig. 8 illustrates an example of a circuit configuration of the direct-current part voltage comparator 306. The direct-current part voltage comparator 306 illustrated in Fig. 8 is a hysteresis comparator using an operational amplifier U2. Note that, although an example in which the operational amplifier U2 is used will be described in here, the direct-current part voltage comparator 306 may be configured using a comparator, instead of the operational amplifier U2. The direct-current part voltage comparator 306 includes the operational amplifier U2, resistors R5, R6, R7, R8, and R9, and capacitors C2 and C3. One terminal of the resistor R5 and one terminal of the resistor R9 are coupled to the coupling point between the shunt regulator U1 and the resistor R1. In other words, a constant voltage (a power source voltage for the comparator) is applied to the one terminals of the resistors R5 and R9 from the comparator power supply circuit 305. The resistors R5 and R6 are coupled to each other in series, one terminal of the resistor R6 is coupled to another terminal of the resistor R5, and another terminal of the resistor R6 is coupled to the common line COM. The resistor R7 is coupled between a coupling point of the resistors R5 and R6 and a non-inverting input terminal (+) of the operational amplifier U2. As a result, a voltage acquired by dividing an output voltage of the comparator power supply circuit 305 by the resistors R5 and R6 is applied to the non-inverting input terminal (+).

Furthermore, the capacitor C2 is coupled between the non-inverting input terminal (+) of the operational amplifier U2 and the common line COM. Furthermore, the coupling point of the resistors 81 and 82 is coupled to an inverting input terminal (-) of the operational amplifier U2. The resistor R8 is coupled between an output terminal and the non-inverting input terminal (+) of the operational amplifier U2, and the capacitor C3 is coupled in parallel to the resistor R8. Another terminal of the resistor R9 is coupled to the output terminal of the operational amplifier U2. Note that the capacitor C3 is used to adjust, when a voltage at the non-inverting input terminal (+) of the operational amplifier U2 changes due to hysteresis action, a transient waveform of the voltage, and whether or not the capacitor is used is selected as necessary.

The direct-current part voltage comparator 306 outputs a high level signal to the drive circuit 9 when the voltage at the non-inverting input terminal (+) exceeds the voltage at the coupling point of the resistors 81 and 82 by a predetermined value. Furthermore, when the voltage at the non-inverting input terminal (+) becomes lower than the voltage at the coupling point of the resistors 81 and 82 by a predetermined value, the direct-current part voltage comparator 306 outputs a signal at a low level to the drive circuit 9. A voltage higher than the voltage at the non-inverting input terminal (+) by a predetermined value serves as the first threshold voltage Vt1 for determining whether or not to turn on the semiconductor switch 52 in the excessive voltage protection circuit 5. A voltage lower than the voltage at the non-inverting input terminal (+) by a predetermined value serves as the second threshold voltage Vt2 for determining whether or not to turn off the semiconductor switch 52 in the excessive voltage protection circuit 5.

### (8-4-6) Power Source Switcher 303

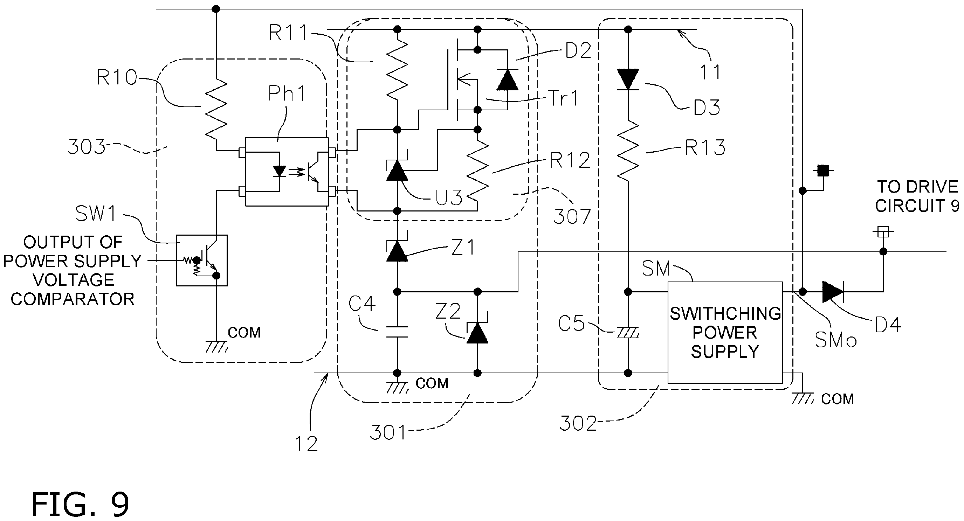

Fig. 9 illustrates an example of a circuit configuration of the power source switcher 303. The power source switcher 303 illustrated in Fig. 9 includes a resistor R10, a photo-coupler Ph1, and a switch part SW1. In the power source switcher 303, the resistor R10, a light-emitting diode in the photo-coupler Ph1, and the switch part SW1 are coupled in series between an output terminal of the second power supply circuit 302 and the common line COM. A signal outputted from the power supply circuit voltage comparator 304 is supplied to the switch part SW1. The output signal of the power supply circuit voltage comparator 304 is a signal for causing the power source switcher 303 to output a stop signal.

When the output signal of the power supply circuit voltage comparator 304 goes high, the switch part SW1 is turned on, and a current flows through the resistor R10 and a light-emitting element in the photo-coupler Ph1. When the output signal of the power supply circuit voltage comparator 304 goes low, the switch part SW1 is turned off, and no current flows through the light-emitting element. When a current flows through the light-emitting element, a light-receiving element (between two output terminals) of the photo-coupler Ph1 becomes conductive. When the light-receiving element in the photo-coupler Ph1 becomes conductive, the first power supply circuit 301 is stopped.

### (8-4-7) First Power Supply Circuit 301

Fig. 9 illustrates an example of a circuit configuration of the first power supply circuit 301. The first power supply circuit 301 illustrated in Fig. 9 includes a constant current circuit 307, a Zener diode Z1 for limiting an operating voltage, a capacitor C4, and a Zener diode Z2 for a gate-driving power source. The constant current circuit 307 is coupled to the output terminals of the photo-coupler Ph1. When the photo-coupler Ph1 has become conductive, the constant current circuit 307 does not operate, and, when the photo-coupler Ph1 has not become conductive, the constant current circuit 307 operates, allowing the first power supply circuit 301 to output the first output voltage.

The constant current circuit 307, the Zener diode Z1, and the Zener diode Z2 are coupled in series between the first direct-current bus 11 and the second direct-current bus 12. The capacitor C4 is coupled in parallel to the Zener diode Z2. The Zener diodes Z1 and Z2 are coupled to allow cathodes to be higher in potential than anodes. The constant current circuit 307 is a current limiting circuit that limits a current flowing through the Zener diodes Z1 and Z2. The constant current circuit 307 and the Zener diodes Z 1 and Z2 are coupled to each other in series. When the constant current circuit 307 is operating, the first output voltage is outputted from a coupling point between the anode of the Zener diode Z1 and the cathode of the Zener diode Z2. The cathode of the Zener diode Z2 is coupled to the drive circuit 9.

Note herein that a breakdown voltage VZ2 of the Zener diode Z2 serves as the first output voltage of the first power supply circuit that is in the drivable state. When a voltage of the capacitor C4 when the power source has been turned on is zero, a period of time Δt1 that is necessary for allowing the voltage of the capacitor C4 to reach VZ2 is expressed by a relationship of Δt1 = CC4 VZ2/IC1, where IC1 is a current of the constant current circuit and CC4 is an electrostatic capacitance of the capacitor C4. Therefore, setting the electrostatic capacitance CC4 to a minimum capacitance necessary for the drive circuit makes it possible to reduce a period of time for starting the first output voltage or a necessary current.

### (8-4-7-1) Configuration Example of Constant Current Circuit 307

Fig. 9 illustrates an example of a circuit configuration of the constant current circuit 307. The constant current circuit 307 illustrated in Fig. 9 includes resistors R11 and R12, a shunt regulator U3, a metal-oxide-semiconductor (MOS) transistor Tr1, and a diode D2. One terminal of the resistor R11 is coupled to the first direct-current bus 11, and a cathode of the shunt regulator U3 is coupled to another terminal of the resistor R11. An anode of the shunt regulator U3 is coupled to the cathode of the Zener diode Z1. A drain of the MOS transistor Tr1 is coupled to the first direct-current bus 11, and a source of the MOS transistor is coupled to one terminal of the resistor R12. Another terminal of the resistor R12 is coupled to the anode of the shunt regulator U3 (the cathode of the Zener diode Z1). A reference of the shunt regulator U3 is coupled to the source of the MOS transistor Tr1. A gate of the MOS transistor Tr1 is coupled to the anode of the shunt regulator U1. A cathode of the diode D2 is coupled to the drain of the MOS transistor Tr1, and an anode of the diode D2 is coupled to the source of the MOS transistor Tr1. The two output terminals of the photo-coupler Ph1 are coupled to the anode and the cathode of the shunt regulator U3, respectively.

When the two output terminals of the photo-coupler Ph1 are in a non-conductive state, a voltage generated between the anode and the cathode of the shunt regulator U3 is applied between the gate and the source of the MOS transistor Tr1, causing the MOS transistor Tr1 to enter an on state. A constant current flows between the drain and the source of the MOS transistor Tr1 that has been in a conductive state, and the current flowing between the drain and the source flows into the cathode of the Zener diode Z1 via the resistor R12.

When the two output terminals of the photo-coupler Ph1 have become a conductive state, no voltage is generated between the anode and the cathode of the shunt regulator U3, causing the MOS transistor Tr1 to enter an off state. Therefore, the constant current flowing through the MOS transistor Tr1 is cut off. The cathode of the Zener diode Z1 is coupled to the first direct-current bus 11 via the resistor R1 and the output terminals of the photo-coupler Ph1. However, a resistance value of the resistor R11 is significantly larger than that of the resistor R12, resulting in an extremely small current flowing through the resistor R11. Therefore, the output power of the first power supply circuit 301, which is supplied from the two terminals of the Zener diode Z2, also becomes extremely small, attaining an operation stoppage state.

### (8-4-7-2) Another Configuration Example of First Power Supply Circuit 301

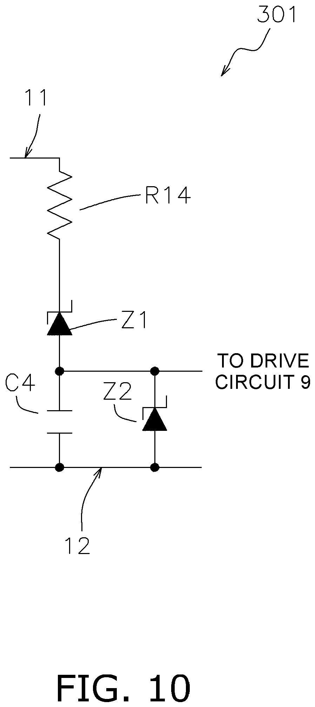

Fig. 10 illustrates another example of the circuit configuration of the first power supply circuit 301. A resistor R14, the Zener diode Z1, the capacitor C4, and the Zener diode Z2 for the gate-driving power source, which are illustrated in Fig. 10, are included. The resistor R14, the Zener diode Z1, and the Zener diode Z2 are coupled in series between the first direct-current bus 11 and the second direct-current bus 12. The capacitor C4 is coupled in parallel to the Zener diode Z2. The Zener diodes Z 1 and Z2 are coupled in a reverse direction. The resistor R14 is a current limiting element that limits a current flowing through the Zener diodes Z1 and Z2. The resistor R14 and the Zener diodes Z1 and Z2 are coupled to each other in series. The first output voltage is outputted from a coupling point between the anode of the Zener diode Z 1 and the cathode of the Zener diode Z2. The cathode of the Zener diode Z2 is coupled to the drive circuit 9.

### (8-4-7-3) Still Another Configuration Example of First Power Supply Circuit 301

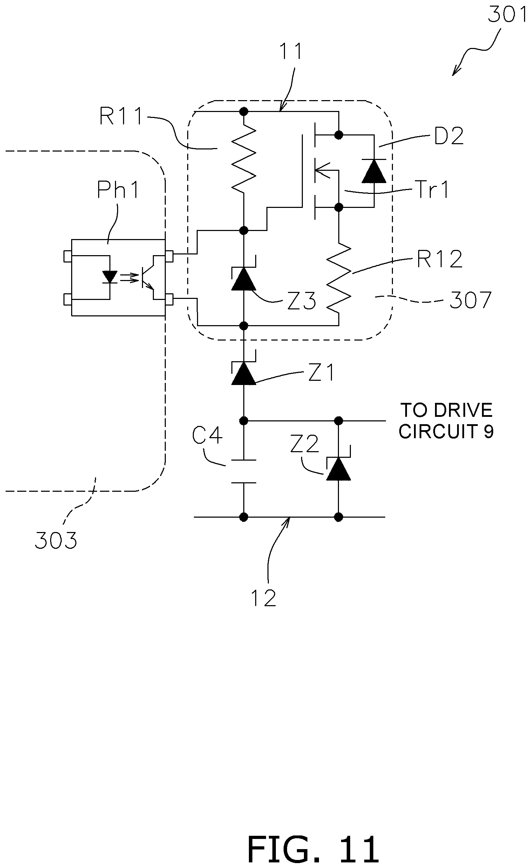

Fig. 11 illustrates still another example of the circuit configuration of the first power supply circuit 301. The first power supply circuit 301 illustrated in Fig. 11 includes the constant current circuit 307, the Zener diode Z1, the capacitor C4, and the Zener diode Z2 for the gate-driving power source, identical to the first power supply circuit 301 illustrated in Fig. 9. The first power supply circuit 301 illustrated in Fig. 11 is different from the first power supply circuit 301 illustrated in Fig. 9 in that a Zener diode Z3 is used, instead of the shunt regulator U3. A cathode of the Zener diode Z3 is coupled to the other terminal of the resistor R11 and the gate of the MOS transistor Tr1. An anode of the Zener diode Z3 is coupled to the other terminal of the resistor R12 and the cathode of the Zener diode Z1. A constant voltage generated between the two terminals of the Zener diode Z3 causes a constant current to flow through the MOS transistor Tr1 and the resistor R12. When the two output terminals of the photo-coupler Ph1 in the power source switcher 303 have become the conductive state, the constant current circuit 307 is stopped from operating, and, when the output terminals have become the non-conductive state, the constant current circuit 307 operates, identical to the first power supply circuit 301 illustrated in Fig. 9.

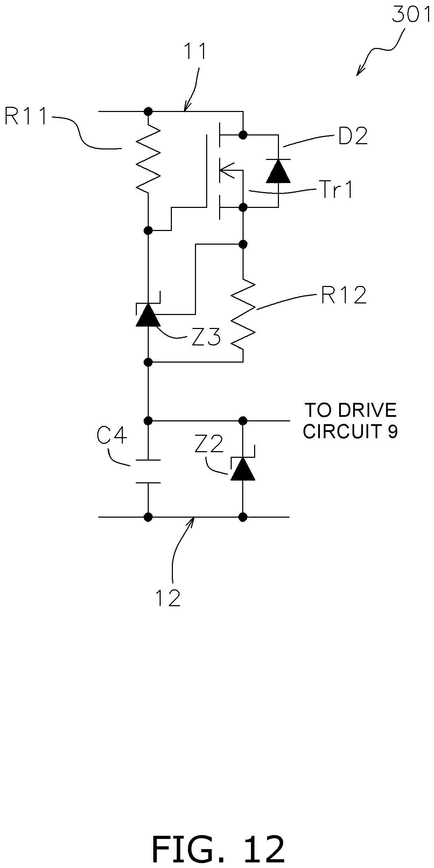

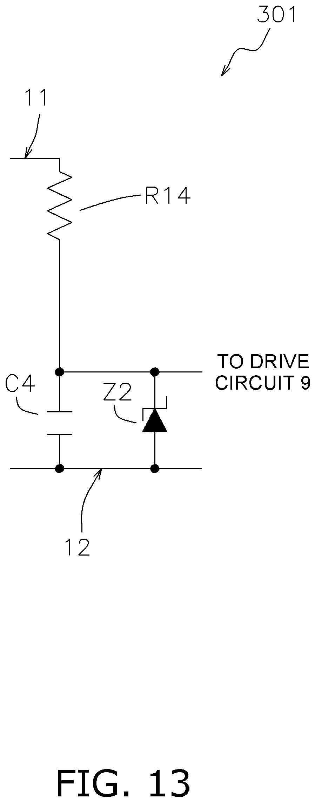

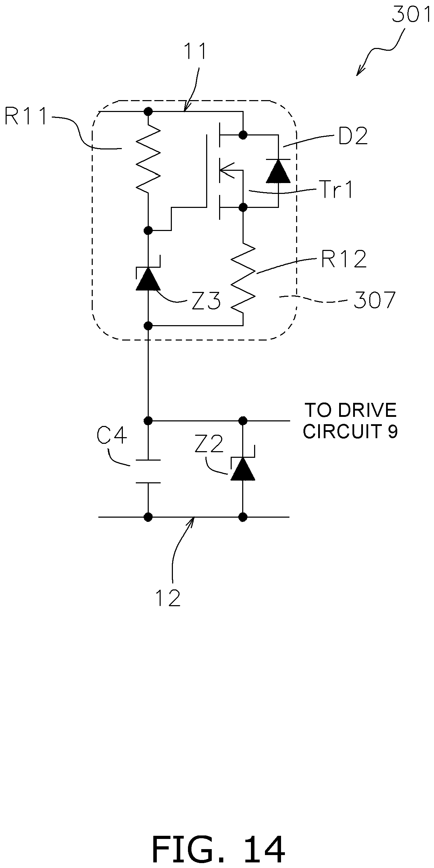

Note that, in the first power supply circuit 301, as illustrated in Figs. 12, 13, and 14, the Zener diode Z1 may be removed from each of the first power supply circuits 301 illustrated in Figs. 9, 10, and 11, and the location from which the Zener diode Z1 has been removed may be wired for coupling. However, when the Zener diode Z1 has not been provided, a current flows through the first power supply circuit 301 from a state where a direct-current voltage is lower, increasing power consumption in the first power supply circuit 301, compared with the cases where the Zener diode Z1 has been provided. For each component constituting the first power supply circuit 301, as illustrated in Figs. 12, 13, and 14, some are identical to and denoted by identical reference numerals to those of the first power supply circuit 301, as illustrated in Figs. 9, 10, and 11.

### (8-4-8) Second Power Supply Circuit 302

Fig. 9 illustrates an example of a circuit configuration of the second power supply circuit 302. The second power supply circuit 302 illustrated in Fig. 9 includes a diode D3, a resistor R13, an electrolytic capacitor C5, and a switching power supply SM. The diode D3, the resistor R13, and the electrolytic capacitor C5 are coupled in series between the first direct-current bus 11 and the second direct-current bus 12. The diode D3, the resistor R13, and the electrolytic capacitor C5 form a primary-side circuit of the switching power source. An anode of the diode D3 is coupled to the first direct-current bus 11, and a cathode of the diode D3 is coupled to one terminal of the resistor R13. Another terminal of the resistor 13 is coupled to one terminal of the electrolytic capacitor C5, and another terminal of the electrolytic capacitor C5 is coupled to the second direct-current bus 12. A voltage generated between the two terminals of the electrolytic capacitor C5 is applied to the switching power supply SM, allowing the switching power supply SM to generate the second output voltage between the second direct-current bus 12 and an output terminal SMo. Note that, as for the diode D3, when fluctuation of a direct-current voltage does not cause a problem in operation of the switching power supply SM, the diode D3 may be omitted, and the resistor R13 may be directly coupled to the first direct-current bus 11. Furthermore, the resistor R13 may be a positive temperature coefficient (PTC) thermistor.

### (8-4-8-1) Switching Power Supply SM

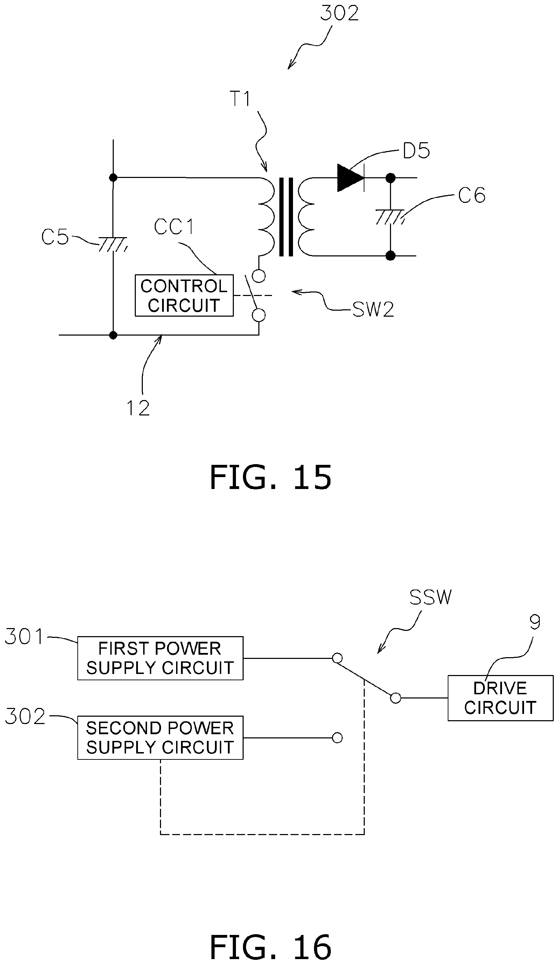

Fig. 15 illustrates an example of a circuit configuration of the switching power supply SM. The switching power supply SM illustrated in Fig. 15 is a flyback converter. The switching power supply SM includes a transformer T1, a control circuit CC1, a switch part SW2, a diode D5, and an electrolytic capacitor C6. On a primary side of the transformer T1, a closed circuit including an electrolytic capacitor C5 and the switch part SW2 is formed. As the switch part SW2 is turned on or off, a pulse voltage is generated, allowing an alternating-current voltage to be generated on a secondary side of the transformer.

Although Fig. 15 illustrates only a power source output necessary for turning on or off the semiconductor switch 52 on the secondary side of the transformer T1, a plurality of power source outputs may be provided as power sources for those other than circuits necessary for providing protection against an excessive voltage, such as a gate driver 401 for the inverter circuit 6.

### (8-4-9) Selection of Outputs of First Power Supply Circuit 301 and Second Power Supply Circuit 302

Fig. 9 illustrates an example of a circuit configuration for selecting the outputs of the first power supply circuit 301 and the second power supply circuit 302. A circuit for selecting the outputs of the first power supply circuit 301 and the second power supply circuit 302 includes a diode D4. The diode D4 has an anode to which the second output voltage of the second power supply circuit 302 is applied, and a cathode to which the first output voltage of the first power supply circuit 301 is applied. The drive circuit 9 is supplied with power from the cathode of the diode D4. To select one of the outputs of the first power supply circuit 301 and the second power supply circuit 302 and to supply the selected output to the drive circuit 9 with a simple configuration where the diode D4 is only included, the first output voltage of the first power supply circuit 301 and the second output voltage of the second power supply circuit 302 are set as follows. When the first power supply circuit 301 is operating, the first output voltage of the first power supply circuit is set to be higher than the second output voltage of the second power supply circuit 302. Therefore, when the first power supply circuit 301 is operating, the diode D4 is reverse-biased, applying the first output voltage of the first power supply circuit 301 to the drive circuit 9. When the first power supply circuit 301 is stopped from operating, in other words, when the constant current circuit 307 is stopped, the second output voltage of the second power supply circuit 302 becomes higher than the first output voltage of the first power supply circuit 301. Therefore, when the first power supply circuit 301 is stopped from operating, the diode D4 is forward-biased (the second output voltage becomes higher than the first output voltage), applying the second output voltage of the second power supply circuit 302 to the drive circuit 9.

Note that, the selection of the power supply circuit may be performed by a selector switch SSW, as illustrated in Fig. 16, to switch between the first power supply circuit 301 and the second power supply circuit 302. The select switch SSW couples the first power supply circuit 301 to the drive circuit 9 when no power source has been turned on. Furthermore, the select switch SSW couples the second power supply circuit 302 to the drive circuit 9 during a period of time in which power is supplied from the second power supply circuit 302 to the drive circuit 9. As a power source used for allowing the select switch SSW to perform switching, the second output voltage of the second power supply circuit 302 or another output voltage of the second power supply circuit 302 may be used. However, when it has been configured that the first power supply circuit 301 and the second power supply circuit 302 are to be switched by the select switch SSW, the first power supply circuit 301 operates even when the second power supply circuit 302 is coupled to the drive circuit 9, increasing a loss, compared with a case where the first power supply circuit 301 is stopped.

On the secondary side of the transformer T1, a closed circuit including the diode D5 and the electrolytic capacitor C6 is formed. An alternating-current voltage generated on the secondary side of the transformer T1 is half-wave rectified by the diode D5 and smoothed by the electrolytic capacitor C6. A voltage between two terminals of the electrolytic capacitor C6 serves as the second output voltage of the second power supply circuit 302.

### (8-4-10) Controller 400 and Gate Driver 401

As illustrated in Fig. 7, the power supply device 1 includes a controller 400 and the gate driver 401. The gate driver 401 is a circuit that outputs a drive signal to the gates of the IGBTs Qup, Qvp, Qwp, Qun, Qvn, and Qwn. The controller 400 includes the power supply circuit voltage comparator 304 and the direct-current part voltage comparator 306, which are already described above, and a microcomputer 320. The microcomputer 320 controls the gate driver 401. Furthermore, the microcomputer 320 controls the drive circuit 9. The microcomputer 320 includes a control computation device and a storage device. As the control computation device, it is possible to use a processor such as a central processing unit (CPU). The control computation device reads a program stored in the storage device, and performs control for a predetermined device or circuit and arithmetic operation on data in accordance with the program. Furthermore, the control computation device is able to write a result of the computation to the storage device and read information stored in the storage device in accordance with the program.

### (8-4-11) Drive Circuit 9

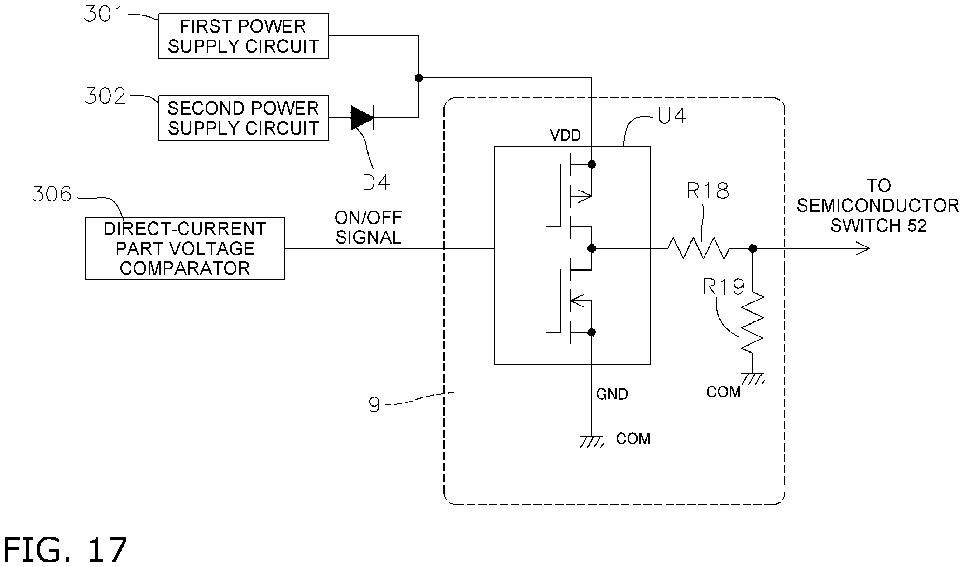

Fig. 17 illustrates an example of a circuit configuration of the drive circuit 9. The drive circuit 9 illustrated in Fig. 17 includes a gate driver integrated circuit U4 and resistors R18 and R19. The first output voltage of the first power supply circuit 301 or the second output voltage of the second power supply circuit 302 is applied to a VDD terminal of the gate driver integrated circuit U4. A GND terminal of the gate driver integrated circuit U4 is coupled to the common line COM.

An output terminal of the gate driver integrated circuit U4 is coupled to one terminal of the resistor R18, and another terminal of the resistor R18 is coupled to the semiconductor switch 52. Furthermore, the resistor R19 is coupled between the other terminal of the resistor R18 and the common line COM. When an on/off signal of the direct-current part voltage comparator 306 is at a low level, the output terminal of the gate driver integrated circuit U4 goes high, turning on the semiconductor switch 52. When the on/off signal of the direct-current part voltage comparator 306 is at a high level, the output terminal of the gate driver integrated circuit U4 goes low, turning off the semiconductor switch 52. Note that, when the output terminal of the gate driver integrated circuit U4 is at a high level, an output voltage becomes approximately the same as a voltage at the VDD terminal. Therefore, a gate voltage when turning on the semiconductor switch 52 becomes approximately the same as the voltage at the VDD terminal.

### (8-4-12) Stop Signal outputted from Power Source Switcher 303

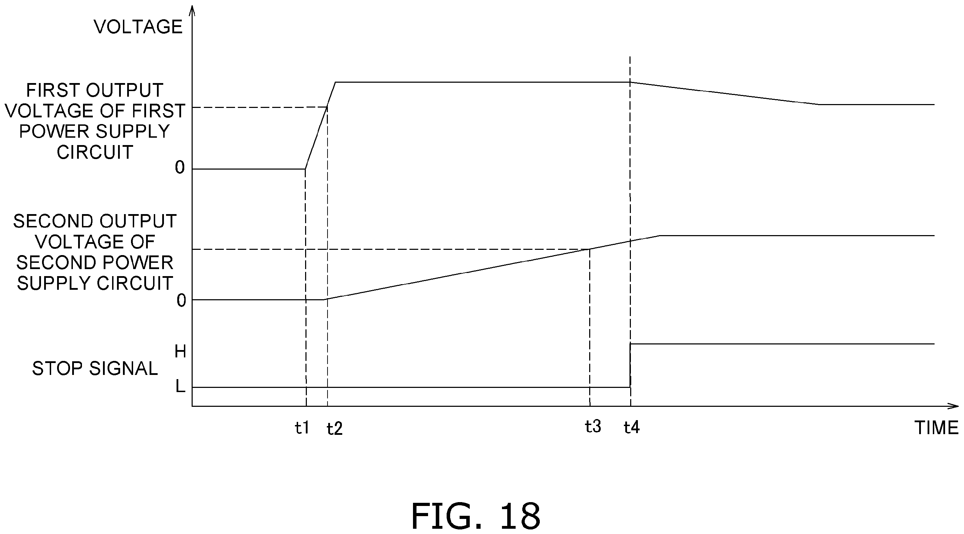

Fig. 18 illustrates a stop signal outputted from the power source switcher 303, the first output voltage of the first power supply circuit 301, and the second output voltage of the second power supply circuit 302. Note that, as illustrated in Figs. 9 and 17, the output of the first power supply circuit 301 and the output of the second power supply circuit 302 are coupled to each other via the diode D4. Therefore, even when the first power supply circuit 301 has been stopped from operating, the first output voltage of the first power supply circuit 301 does not become lower than the second output voltage of the second power supply circuit 302.

In Fig. 18, the power source has been turned on at a point in time t1, and power supply from the power source 200 to the power source terminals PT has been started. As power supply from the power source 200 to the power source terminals PT is started, the first output voltage of the first power supply circuit 301 and the second output voltage of the second power supply circuit 302 start to rise. The first output voltage of the first power supply circuit 301 rises rapidly, and, at a point in time t2, becomes a voltage allowing the drive circuit 9 to enter the drivable state in which the semiconductor switch 52 is able to be turned on. However, the second output voltage of the second power supply circuit 302 has not yet reached a voltage allowing the drive circuit 9 to enter the drivable state at this time. After that, at a point in time t3, the second output voltage of the second power supply circuit 302 reaches a voltage allowing the drive circuit 9 to enter the drivable state. The power source switcher 303 outputs a stop signal to the first power supply circuit 301 at a point in time t4 at which the second output voltage after the point in time t3 has sufficiently exceeded the voltage allowing the drive circuit 9 to enter the drivable state.

In the third embodiment, the first output voltage of the first power supply circuit 301 or the second output voltage of the second power supply circuit 302 is applied to the VDD terminal of the gate driver integrated circuit U4, which is outputted as a voltage at a high level of the gate driver integrated circuit U4. Furthermore, the voltage outputted from the gate driver integrated circuit U4 is applied to the gate of the semiconductor switch 52. When the semiconductor switch 52 is an N-channel IGBT, the voltage applied to the gate must be such that the voltage between the collector and emitter does not become excessive due to a collector current flowing when the IGBT is turned on. When a gate voltage is insufficient, a voltage between the collector and the emitter rises, and a loss increases, leading to thermal destruction in the semiconductor switch. Therefore, in the third embodiment, it is also possible to rephrase a voltage allowing the drive circuit 9 to enter the drivable state as a voltage allowing the semiconductor switch to be turned on without causing thermal destruction.

### <Fourth Embodiment>

### (9) Overall Configuration

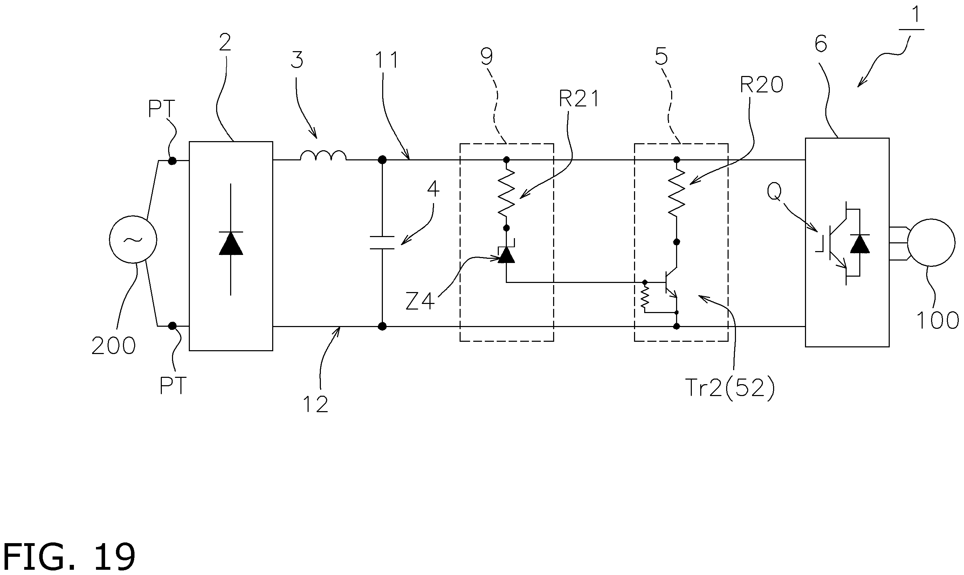

Fig. 19 illustrates an example of a configuration of a power supply device 1 according to a fourth embodiment. The power supply device 1 illustrated in Fig. 19 includes the power source terminals PT to which power is supplied from the power source 200, the first direct-current bus 11 and the second direct-current bus 12 to which a direct-current voltage is applied, the inductor 3, the capacitor 4, the inverter circuit 6 serving as the circuit device, the excessive voltage protection circuit 5, and the drive circuit 9. In the configuration of the power supply device 1 according to the fourth embodiment, the power source terminals PT to which power is supplied from the power source 200, the first direct-current bus 11 and the second direct-current bus 12 to which a direct-current voltage is applied, the inductor 3, the capacitor 4, and the inverter circuit 6 are configured in an identical manner to those of the power supply device 1 according to the first embodiment, and their descriptions will thus be omitted in here.

### (10) Detailed Configuration

### (10-1) Excessive Voltage Protection Circuit 5

The excessive voltage protection circuit 5 according to the fourth embodiment, which is illustrated in Fig. 19, includes a resistor R20 and an NPN-type bipolar transistor (BJT) Tr2. The excessive voltage protection circuit 5 is a series circuit of the resistor R20 and the bipolar transistor Tr2. One terminal of the resistor R20 is coupled to the first direct-current bus 11, and another terminal of the resistor R20 is coupled to a collector of the bipolar transistor Tr2. An emitter of the bipolar transistor Tr2 is coupled to the second direct-current bus 12, and a base is coupled to an anode of a Zener diode Z4. In the excessive voltage protection circuit 5 illustrated in Fig. 19, the bipolar transistor Tr2 serves as the semiconductor switch 52.

### (10-2) Drive Circuit 9

The drive circuit 9 according to the fourth embodiment illustrated in Fig. 19 includes a resistor R21 and the Zener diode Z4. The drive circuit 9 is a series circuit of the resistor R21 and the Zener diode Z4. One terminal of the resistor R21 is coupled to the first direct-current bus 11, and another terminal of the resistor R21 is coupled to a cathode of the Zener diode Z4. The anode of the Zener diode Z4 serves as an output terminal of the excessive voltage protection circuit 5. An output terminal of the drive circuit 9 is coupled to the base of the bipolar transistor Tr2.

A Zener voltage of the Zener diode Z4 serves as a threshold voltage for turning on the bipolar transistor Tr2 serving as the semiconductor switch 52 when providing protection against an excessive voltage. The resistor R21 in the drive circuit 9 is selected to allow a current necessary for the bipolar transistor Tr2 serving as the semiconductor switch 52 to flow when providing protection against an excessive voltage.

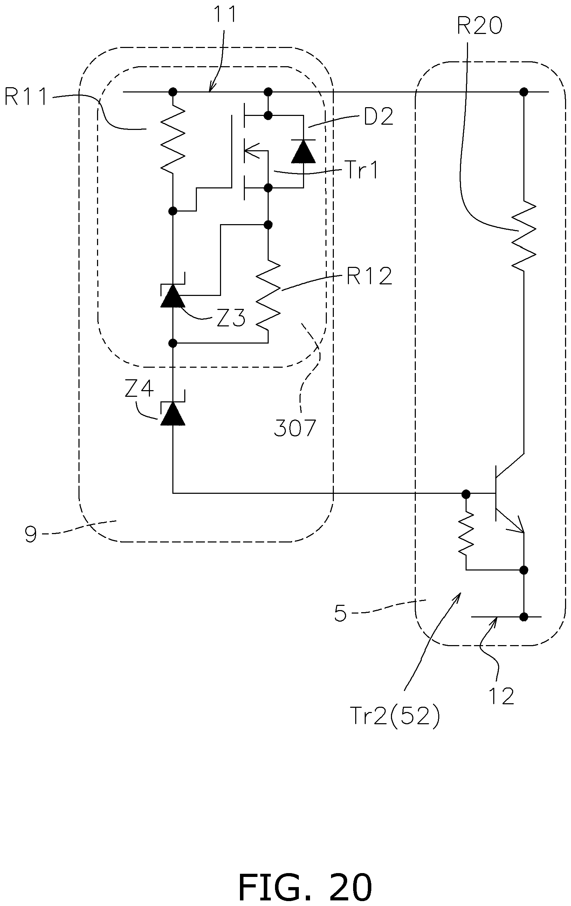

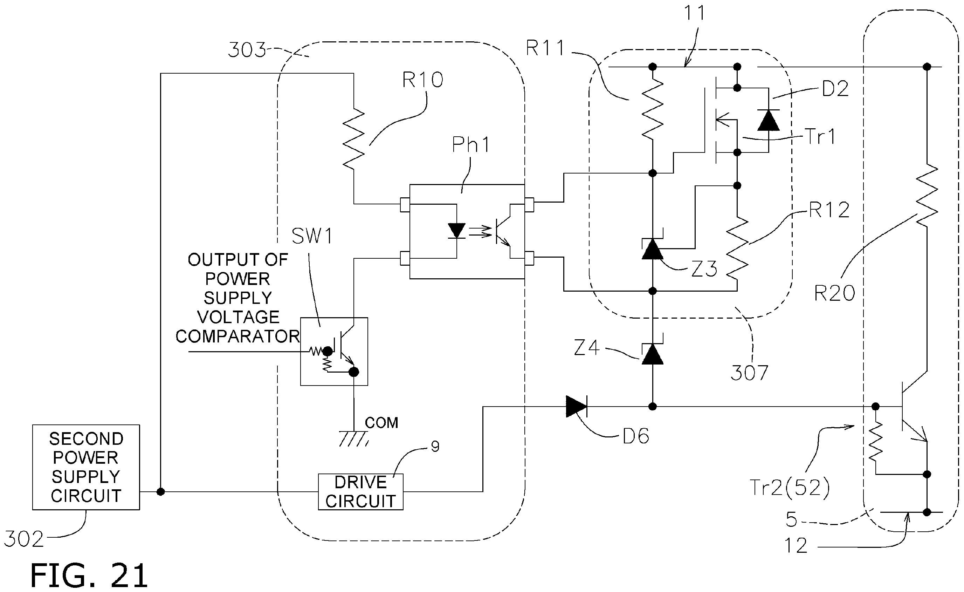

As a voltage in a direct-current part (the first direct-current bus 11 and the second direct-current bus 12) rises, it is possible to allow the bipolar transistor Tr2 to enter the drivable state until a half resonance cycle of the closed circuit CL, making it possible to provide protection against an excessive voltage. Furthermore, the resistor R21 that is a current limiting element may be replaced with the constant current circuit 307, as illustrated in Figs. 9 and 11 (see Fig. 20). Some of the components of the constant current circuit 307 illustrated in Fig. 20 are identical to and denoted by identical reference numerals to those of the constant current circuit 307 illustrated in Fig. 9. Furthermore, providing the drive circuit 9 using the second power supply circuit 302 when stability is attained makes it possible to achieve driving with suppressed power consumption (see Fig. 21). Each component constituting the drive circuit 9 illustrated in Fig. 21, denoted by the same reference numerals as the power source switcher 303 and the constant current circuit 307 illustrated in Fig. 9, is the same component. A voltage is applied to the bipolar transistor Tr2 from the second power supply circuit 302 via a diode D6. Furthermore, the second power supply circuit 302 is coupled to one terminal of the resistor R10, and the photo-coupler Ph1 is coupled to another terminal of the resistor R10. In this case, a current limiting element (the resistor R20) or a circuit that supplies a drive current by the constant current circuit 307 and the Zener diode Z4 achieves an identical function to that of the first power supply circuit 301.

### (11) Feature

### (11-1)

In each of the power supply devices 1 according to the first embodiment to the third embodiment, the drive circuit 9 enters the drivable state in which the semiconductor switch 52 is able to be turned on in the first period of time from when a direct-current voltage applied to the first direct-current bus 11 and the second direct-current bus 12 starts to rise to a half cycle of resonance generated in the closed circuit CL (see Fig. 1). In each of the power supply devices 1, the excessive voltage protection circuit 5 is driven by the drive circuit 9 described above. It is possible to turn on the semiconductor switch 52 in the excessive voltage protection circuit 5 before the inverter circuit 6 serving as the circuit device reaches an excessive voltage due to resonance generated when the direct-current voltage applied to the first direct-current bus 11 and the second direct-current bus 12 rises. As a result, it is possible to suppress application of an excessive voltage to the inverter circuit 6, making it possible to improve each of the power supply devices 1 in protection reliability against an excessive voltage.

### (11-2)

The power supply device 1 according to the second embodiment or the third embodiment includes the second power supply circuit 302 that supplies power to the drive circuit 9 in the second period of time after the predetermined period of time has elapsed. In Fig. 18, the first power supply circuit 301 stops at the point in time t4 after the second output voltage of the second power supply circuit 302 reaches a voltage satisfying the drivable state. In Fig. 18, the predetermined period of time is a period of time from the point in time t2 to the point in time t4. The second period of time starts after the point in time t4, and, after the point in time t4, the second power supply circuit 302 substantially supplies power to the drive circuit 9. Causing the first power supply circuit 301 to stop after the second output voltage of the second power supply circuit 302 reaches a voltage satisfying the drivable state makes it possible to reduce power consumption in the first power supply circuit 301. In the power supply device 1 having the configuration as illustrated in Fig. 9, in particular, it is possible to minimize power consumption in the first power supply circuit 301 as necessary as possible.

### (11-3)

In the power supply device 1 according to the second embodiment or the third embodiment, the power capacity of the first power supply circuit 301 dedicated for the drive circuit 9 is smaller than the power capacity of the second power supply circuit. Reducing the power capacity of the first power supply circuit 301 makes it possible to shorten a period of time until the first output voltage of the first power supply circuit 301 reaches a voltage satisfying the drivable state.

### (11-4)

Since, in the power supply device 1 according to the third embodiment, the output of the first power supply circuit 301 and the output of the second power supply circuit 302 are coupled to each other via the diode D4, as illustrated in Fig. 9, it is possible to prevent a period of time until the first power supply circuit 301 enters the drivable state in the first period of time from being influenced by the electrolytic capacitor C6 (see Fig. 15) on the output side of the second power supply circuit 302. Specifically, the power supply device 1 according to the third embodiment makes it possible to prevent an increase in the rise time of the output voltage of the first power supply circuit 301 due to charging the electrolytic capacitor C6, in addition to the capacitor C4.

### (12) Modification Examples

### (12-1) Modification Example A

In the third embodiment described above, the case where the resistor R14 is used as the current limiting element has been described, as illustrated in Fig. 10. However, the current limiting element is not limited to a resistor. As the current limiting element, it is possible to use a variable resistor or a positive temperature coefficient (PTC) thermistor, for example.

### (12-2) Modification Example B

In the third embodiment described above, the case where the constant current circuit 307 is used as the current limiting circuit has been described, as illustrated in Figs. 9 and 11. However, the current limiting circuit is not limited to a constant current circuit. The current limiting circuit may be a current clamp circuit, for example.

### (12-3) Modification Example C

In each of the first to third embodiments described above, the inverter circuit 6 has been described as an example of the circuit device. However, the circuit device is not limited to the inverter circuit 6. The circuit device may be a DC-DC converter, for example. In this case, the load is a direct-current load.

While the embodiments of the present disclosure have been described above, it will be understood that various changes in form and detail may be made therein without departing from the spirit and scope of the present disclosure as set forth in the appended claims.

### REFERENCE SIGNS LIST

- 1: Power supply device
- 2: Rectifier
- 3: Inductor
- 4: Capacitor
- 5: Excessive voltage protection circuit
- 6: Inverter circuit (example of circuit device)
- 9: Drive circuit
- 11: First direct-current bus
- 12: Second direct-current bus
- 52: Semiconductor switch
- 301: First power supply circuit
- 302: Second power supply circuit
- 307: Constant current circuit (example of current limiting circuit)
- D4: Diode
- PT: Power source terminal
- R14: Resistor (example of current limiting element)
- Z1,Z2: Zener diode

### CITATION LIST

### PATENT LITERATURE

PTL 1: Japanese Unexamined Patent Application Publication No. 2020-124104

## Claims

1. A power supply device (1) provided with a first direct-current bus (11) to which a direct-current voltage is applied, a second direct-current bus (12) having a potential lower than a potential in the first direct-current bus, and a capacitor (4) coupled between the first direct-current bus and the second direct-current bus, the power supply device converting power supplied to the first direct-current bus and the second direct-current bus to supply the converted power to a load, the power supply device comprising:
power source terminals (PT) to which power is supplied from a power source;
an inductor (3) inserted in a wiring path from the power source terminal to the first direct-current bus or the second direct-current bus;
a circuit device (6) coupled between the first direct-current bus and the second direct-current bus;
an excessive voltage protection circuit (5) that is coupled between the first direct-current bus and the second direct-current bus, that includes a semiconductor switch (52), and that performs operation of protecting the circuit device against an excessive voltage when the semiconductor switch is turned on; and
a drive circuit (9) that drives the semiconductor switch,
wherein the drive circuit is supplied with driving power as power is supplied to the power source terminals, and enters a drivable state in which the semiconductor switch is able to be turned on in a first period of time from when the direct-current voltage starts to rise along with start of power supply to the power source terminals to a half cycle of resonance generated in a closed circuit including the power source, the capacitor, and the inductor.

2. The power supply device (1) according to claim 1, wherein the drive circuit compares an inter-line voltage between the first direct-current bus and the second direct-current bus with a threshold voltage that is higher than the inter-line voltage when stability is attained, and turns on the semiconductor switch when the inter-line voltage exceeds the threshold voltage.

3. The power supply device (1) according to claim 1 or 2, wherein the circuit device is an inverter circuit (6) that is coupled between the first direct-current bus and the second direct-current bus and that includes a semiconductor element.

4. The power supply device (1) according to any one of claims 1 to 3,
further comprising a first power supply circuit (301) that supplies power to the drive circuit in a predetermined period of time including the first period of time as power is supplied to the power source terminals,
wherein, in the first power supply circuit, a first output voltage of the first power supply circuit reaches a voltage satisfying the drivable state within the first period of time.

5. The power supply device (1) according to claim 4,
further comprising a second power supply circuit (302) that supplies power to the drive circuit in a second period of time after the predetermined period of time has elapsed,
wherein, in the second power supply circuit, a second output voltage of the second power supply circuit reaches a voltage satisfying the drivable state after the first period of time has elapsed and until a predetermined period of time has elapsed.

6. The power supply device (1) according to claim 5, wherein the first power supply circuit stops after the second output voltage of the second power supply circuit has reached a voltage satisfying the drivable state.

7. The power supply device (1) according to claim 5 or 6, wherein the first power supply circuit has a smaller power capacity than a power capacity of the second power supply circuit.

8. The power supply device (1) according to any one of claims 5 to 7
further comprising a diode (D4) having an anode to which the second output voltage of the second power supply circuit is applied and a cathode to which the first output voltage of the first power supply circuit is applied,
wherein the drive circuit is configured to accept power supplied from the cathode of the diode.

9. The power supply device (1) according to any one of claims 4 to 8, wherein
the first power supply circuit includes a Zener diode (Z2) and a current limiting element (R14) or a current limiting circuit (307), and
the current limiting element or the current limiting circuit limits a current flowing through the Zener diode.

10. The power supply device (1) according to claim 9, wherein the current limiting circuit is a constant current circuit (307).

11. The power supply device (1) according to any one of claims 1 to 10, wherein the power source is an alternating-current power source, and a rectifier (2) that rectifies an alternating-current voltage of the alternating-current power source into the direct-current voltage is inserted in the wiring path from the power source terminal to the first direct-current bus and the second direct-current bus.
